# EUROPÄISCHE PATENTSCHRIFT

(11) **EP 2 878 440 B1**
(45) Veröffentlichungstag und Bekanntmachung des Hinweises auf die Patenterteilung: **06.02.2019**
(21) Anmeldenummer: 14195739.9
(22) Anmeldetag: 01.12.2014
(51) Int. Cl.: B32B 5/18, B32B 7/12, B32B 25/14, B32B 27/06, B32B 27/08, B32B 27/16, B32B 27/28, B32B 27/30, B32B 27/32, B32B 27/34, B32B 27/36, B32B 27/40, B32B 37/04, B32B 37/12

(54) **VERPACKUNG MIT FOLIENVERBUND, SOWIE HERSTELLUNGSVERFAHREN**
PACKAGING COMPRISING FILM COMPOSITE, AND MANUFACTURING METHOD
EMBALLAGE COMPRENANT FILM COMPOSITE AINSI QUE PROCÉDÉ DE FABRICATION

(30) Priorität: 29.11.2013 DE 102013113285
(43) Veröffentlichungstag der Anmeldung: 03.06.2015
(73) Patentinhaber: Buergofol GmbH, 93354 Siegenburg (DE)
(72) Erfinder: Boutrid, Dr. Abdel-Kader, 93354 Siegenburg (DE); Stark, Dr. Kurt, 91284 Neuhaus a. d. Pegnitz (DE); Schleicher, Gregor, 85049 Ingolstadt (DE); Wink, Christopher, 93077 Bad Abbach (DE)
(74) Vertreter: Schlief, Thomas P.

(56) Entgegenhaltungen:
- EP-A1- 1 767 341
- US-A1- 2010 239 796
- US-A1- 2010 323 134
- US-A1- 2012 189 856

## Beschreibung

Die Erfindung betrifft eine Verpackung, wobei eine Oberfolie und/oder eine Unterfolie der Verpackung als Folienverbund ausgebildet ist, der mindestens eine erste Folieneinheit mit mindestens einer ein- oder mehrschichtigen ersten Folie aus Kunststoff und mindestens eine zweite Folieneinheit mit mindestens einer ein- oder mehrschichtigen zweiten Folie aus Kunststoff umfasst, wobei die erste und die zweite Folie - und damit auch die erste und die zweite Folieneinheit - miteinander verbunden sind.

Folienverbünde, auch meist Verbundfolien genannt, aus zwei oder mehreren Kunststofffolien finden sich heutzutage in nahezu allen Lebensbereichen.

EP 1 767 341 A1, US 2012/189856 A1, US 2010/239796 A1 und US 2010/323134 A1 offenbaren Folienverbünde mit einer ersten und einer zweiten Folieneinheit.

Das bedeutendste und wirtschaftlich wichtigste Herstellungsverfahren stellt die Coextrusion dar. Weitere wichtige Verfahren sind die Kaschierung und die Extrusionsbeschichtung.

Bei der Extrusionsbeschichtung wird die Schmelze eines thermoplastischen Kunststoffs auf eine Folie aufgebracht, wobei ohne Verwendung eines (weiteren) Klebemittels eine 2-Schicht-Verbundfolie erhalten wird. Bringt man die Schmelze eines Thermoplasts durch Extrusion zwischen zwei Folien, werden diese beiden Folien zu einer 3-Schicht-Verbundfolie miteinander verbunden. Hier werden also zwei Folien miteinander verklebt, weshalb man auch von Extrusionskaschierung spricht. Als thermoplastische Kunststoffe, die in der Schmelze aufgebracht werden, werden meist leicht extrudierbare Produkte, vor allem Polyethylene, lonomere oder Ethylen-Vinylacetat-Copolymere verwendet. Besonders geeignet sind Schmelzklebstoffe (Hotmelts). Ggf. müssen Haftvermittler eingesetzt werden.

Weitere Kaschierverfahren sind das Thermokaschieren bzw. Heißkaschieren sowie das Flammkaschieren.

Ein weiteres, sehr verbreitetes Kaschier-Verfahren ist die sog. Kleberkaschierung, bei der ein- oder mehrkomponentige Kaschierklebstoffe mit oder ohne Lösungsmittel eingesetzt werden. Bei der Kleberkaschierung wird die Trägerfolie mit Kleber beaufschlagt, in einem Trockentunnel getrocknet und mittels Kühlwalze auf Raumtemperatur gebracht. Nach Zulaufen einer zweiten Folie werden die beiden Folien mit exakt gleicher Zugspannung im Kaschierwerk zusammengeführt und verklebt.

Nachteilig bei der genannten Kleberkaschierung ist beispielsweise, dass auf Basis von z.B. herkömmlichen und etablierten, Lösungsmittel-freien (LF) oder Löschungsmittel-haltigen (LH) 2-K-Polyurethansystemen (deren Komponenten zudem im richtigen Mischungsverhältnis vermischt werden müssen) immer eine unzureichende Kleberaushärtung auftreten kann oder eine sehr lange Trocknungszeit eingehalten werden muss. Ferner besteht immer die Gefahr, dass migrierende Bestandteile aus der Kaschierschicht austreten und so in das verpackte Lebensmittel (Füllgut) gelangen können. Hierdurch resultieren Gefahren für die Gesundheit. Das Bereitstellen des Klebers, sei es durch Kaschierung oder auch durch Extrusionskaschierung, erfordert zudem immer Lagerplatz und ist damit logistisch möglichst zu vermeiden. Schließlich besteht die Gefahr, dass ein reaktives Klebersystem schon vor der Applikation aushärtet, etwa durch Alterung oder durch Einwirkung von Wasser oder durch Eintrocknung (Verdampfen des Lösungsmittels). Schließlich erfordert die Verwendung von Klebern stets einen erhöhten Aufwand bei der Reinigung der Kaschieranlage, und hierbei insbesondere bei Kleberwechseln.

Demnach besteht noch erheblicher entsprechender Verbesserungsbedarf bei Kaschierverfahren zur Verbindung von zwei Kunststofffolien und daher die diesbezügliche Aufgabe, eine einfache, stabile Verbindung zweier Folieneinheiten aus Kunststoff zu erzielen. Insbesondere müssen die Verbundfolien für die Anwendung im Verpackungsbereich als Ober- oder Unterfolie auch tiefziehbar (thermoformbar) sein, ohne dass sich nach dem Thermoformen die Verbundfolie trennt. Hierbei wird im Rahmen der vorliegenden Erfindung unter dem Begriff "Folieneinheit" eine einzige Folie (vorliegend "erste" Folie genannt) oder eine Mehrzahl miteinander verbundener Folien verstanden, wobei im Falle einer solchen Mehrzahl von Folien eine dieser Folien die genannte erste Folie ist. Eine Folieneinheit kann somit beispielsweise von einer Monofolie gebildet sein oder aber auch von einer Verbundfolie aus mehreren Folien, wobei diese Verbundfolie dann Teil des erfindungsgemäßen Folienverbundes ist.

Die vorgenannte Aufgabe wird durch die Merkmale der unabhängigen Ansprüche gelöst. Vorteilhafte Weiterbildungen der Erfindung ergeben sich aus den Merkmalen der abhängigen Ansprüche.

Gemäß der Erfindung wird ein Folienverbund mit einer ersten Folieneinheit vorgeschlagen, die eine ein- oder mehrschichtige erste Folie aus Kunststoff umfasst. Diese erste Folie dient zur Verbindung mit mindestens einer ein- oder mehrschichtigen zweiten Folie aus Kunststoff. Gemäß der Erfindung weist die besagte erste Folie auf einer der zweiten Folie zugewandten Außenseite eine thermisch aktivierbare Außenschicht auf, welche durch thermische Aktivierung und Druckausübung mit der zweiten Folie vollflächig verbindbar bzw. verbunden ist. Die thermische Aktivierung wird ermöglicht, indem diese Außenschicht mindestens ein Polyolefin-Plastomer (POP) und/oder ein Polyolefin-Elastomer (POE) enthält, wodurch die Außenschicht thermisch klebend gemacht wird.

Es sind demnach zumindest eine erste und eine zweite Folieneinheit vorhanden, die durch Temperatur- und Druckeinwirkung miteinander kaschiert werden bzw. kaschiert sind. Sowohl die erste als auch die zweite Folieneinheit können jeweils aus mehreren Folien oder auch nur aus einer einzigen Folie bestehen. Dabei weist die erste Folieneinheit mindestens eine erste Folie mit mindestens einer Schicht und die zweite Folieneinheit mindestens eine zweite Folie mit mindestens einer Schicht auf. Die erste Folie der ersten Folieneinheit ist der zweiten Folie der zweiten Folieneinheit bei der erfindungsgemäßen Kaschierung zugewandt. Dabei enthält die Außenschicht der ersten Folie, die zu einer Außenschicht der zweiten Folie gewandt ist, erfindungsgemäß mindestens ein Polyolefin-Plastomer (POP) und/oder ein Polyolefin-Elastomer (POE) zur erfindungsgemäßen Thermokaschierung.

Die erste Folie der ersten Folieneinheit kann somit insbesondere als Thermokaschierfolie und die zweite Folie der zweiten Folieneinheit als Trägerfolie fungieren, wobei die beiden Folieneinheiten vollflächig, d.h. bevorzugt an jeder Stelle, miteinander durch die thermisch aktivierbare Außenschicht verbunden sind.

Die Vorteile der Erfindung sind darin zu sehen, dass überraschenderweise noch höhere Verbundhaftungswerte erzielt werden können als etwa bei der herkömmlichen lösemittelfreien (LF) Kleberkaschierung mit beispielsweise einem 2-K Polyurethan-System. Diese enorm hohe Verbundhaftung bleibt auch nach einem Thermoformen des erfindungsgemäßen Folienverbundes erhalten. Aber nicht nur die Verbundhaftung wurde größer, sondern durch Migrationsmessungen wurde festgestellt, dass die Migration unter die Nachweisgrenze (Abkürzung: ND, not detectable) gedrückt werden konnte.

Die Verbundhaftung zwischen der ersten und der zweiten Folie beträgt mehr als 4 N/15 mm, vorzugsweise mehr als 6 N/15 mm, besonders bevorzugt mehr als 8 N/15 mm.

Die erfindungsgemäßen Folienverbünde bzw. Verbundfolien werden bei Verpackungen als tiefziehfähige Folien (sowohl als Oberfolie als auch als Unterfolie) zur Verfügung gestellt. Dabei verhalten sich die erfindungsgemäßen thermokaschierten Folien wie die bereits im Stand der Technik bekannten, mit LF- oder LH-Klebern oder anderweitig kaschierten Verbundfolien. Bei Migration und den Verbundhaftungswerten sind die erfindungsgemäßen Folien jedoch deutlich besser als bisher bekannte Folien bzw. Folienverbünde.

Da das Verbinden von Folien mit erhöhtem Aufwand und Kosten verbunden ist, wird vorteilhafterweise die erfindungsgemäße thermisch aktivierbare und funktionierende Schicht gleich im Zuge der Folienextrusion bereitgestellt. Zu ihrer Herstellung sind Cast-Extrusion, Blasextrusion, oder auch Extrusionsbeschichtung mit den aktivierbaren Polyolefin-Plastomeren oder Polyolefin-Elastomeren möglich.

Polyolefin-Plastomere (POP) und Polyolefin-Elastomere (POE) sind Spezialformen von Polyolefinen, wodurch sich diese Produktklassen von den üblichen Polyolefinen differenzieren.

Die erfindungsgemäß in der Schicht zur Haftung auf Folien eingesetzten Polyolefin-Plastomere (POP) und Polyolefin-Elastomere (POE) sind im Wesentlichen niederdichte lineare Polyethylene mit sehr niedriger Molmasse (LLD-PE-VLMW, d.h. linear low density Polyethylene - very low molecular mass), d.h. mit einer niedrigen molekularen Gewichtsverteilung von ungefähr 2.0. Sie wurden ursprünglich zur Verbesserung der elastischen Eigenschaften von Verpackungsfolien entwickelt. Mittlerweile werden diese elastischen Polyethylene auch bei weniger anspruchsvollen Spritzgussteilen eingesetzt, um Kautschuk kostengünstig zu substituieren. Auch in geschäumten Produkten werden POP und POE eingesetzt.

Unter einem Plastomer versteht man ein Polymer-Material, das die Eigenschaften von Elastomeren und Kunststoffen miteinander verbindet, wie beispielsweise gummiartige Eigenschaften mit der Verarbeitbarkeit von Kunststoffen.

Polyolefin-Plastomere sind aufgebaut aus Ethylen- und weiteren alpha-Olefin-Bausteinen. Sie unterscheiden sich von anderen homogenen Polymeren darin, dass sie lange Kettenzweige (long chain branching, LCB) aufweisen, was die Verarbeitbarkeit verbessert. Sie weisen im Allgemeinen eine niedrige molekulare Gewichtsverteilung von ungefähr 2.0 auf und besitzen üblicherweise eine Dichte von unterhalb 0,910 g/cm³. Sie können mit *"single-site*"-Katalysatoren (auch bisweilen als *"constraint geometry catalysts"* bezeichnet) oder Ziegler-Natta-Katalysatoren hergestellt werden. Unter Polyolefin-Plastomeren (POP) und Polyolefin-Elastomeren (POE) werden insbesondere Metallocen-katalysierte Polymere mit den oben genannten Eigenschaften verstanden.

Typischerweise sind POP und POE Copolymere aus Ethylen und Octen, oder Ethylen und Hexen, oder Ethylen und Buten, oder Ethylen und Propylen. Insbesondere sind viele der aktuell zum Einsatz kommenden Polyolefin-Plastomere im Wesentlichen lineare Ethylen-Octen-Copolymere. Polyolefin-Plastomere können transparent oder opak sein. Sie sind generell geeignet für Anwendungen mit hoher Flexibilität, Weichheit oder Zähigkeit.

Die Firma The Dow Chemical Company bietet beispielsweise unter den Markennamen AFFINITY Polyolefin-Plastomere, unter den Markennamen AFFINITY GA und ENGAGE Polyolefin-Elastomere und unter dem Markennamen VERSIFY Plastomere und Elastomere an. Diese Produkte werden mit der INSITE®-Technologie von Dow hergestellt, wobei spezielle Metallocen-Katalysatoren eingesetzt werden.

Eine Methode zur Abgrenzung von Polyolefin-Plastomeren gegenüber anderen Polymeren (außer der Ermittlung der Dichte, s.o.) kann mittels der "Dart-Drop"-Methode, gemessen nach ASTM D 1709 / ISO 7765-1, durchgeführt werden. Mit diesem Verfahren sollen die Unterschiede von signifikant unterschiedlichen Sprödigkeiten bzw. dynamischen Durchstoßfestigkeiten ermittelt werden. Hierbei wird ein Gewicht ("Dart") aus einer definierten Höhe auf eine faltenfrei und fest eingespannte Folie fallen gelassen. Wenn das Gewicht die Folie nicht durchschlägt, wird das nächste, schwerere Gewicht gewählt. In einer Versuchsserie (Serie von 20-25 Fallversuchen) wird dasjenige Gewicht ermittelt, bei dem bei 50% der Falltests die Folie durchstoßen wird und die andere Hälfte gerade noch nicht durchstößt.

Die zwei durchgeführten unterschiedlichen Methoden heißen Methode A und Methode B. Sie unterscheiden sich in der Größe des Gewichts und der Fallhöhe des Gewichts. Bei der Methode A weist das Gewicht einen Durchmesser von 38 mm auf, wobei eine Fallhöhe von 0,66 m gewählt wird. Bei der Methode B betragen der Durchmesser des Gewichts 51 mm und die Fallhöhe 1,5 m.

Die folgenden AFFINITY-Produkte (POP) von The Dow Chemical Group weisen beispielsweise folgende Eigenschaften auf (angegeben sind auch die verwendeten Messstandards D1238, D792 und D1709):

| | "melt index" (g/10 min) D1238 | Dichte (g/cm³) D792 | Filmdicke (µm) | Dart Impact (g) D1709 Methode B |
|---|---|---|---|---|
| AFFINITY PF 1140 | 1,6 | 0,897 | 51 | > 850 |
| AFFINITY PL 1840 | 1,0 | 0,909 | 51 | > 830 |
| AFFINITY PL 1850 | 3,0 | 0,902 | 20 | > 830 |
| AFFINITY PL 1880 | 1,0 | 0,902 | 51 | > 830 |
| AFFINITY PL 1881 | 1,0 | 0,904 | 51 | > 830 |

Verschiedene Hersteller bieten unterschiedliche Polyolefin-Plastomere an. Die Firma Borealis beispielsweise vertreibt unter dem Markennamen Exact® verschiedene Polyolefin-Plastomere in Form von Alpha-Olefin-Copolymeren, die mit Hilfe von Metallocen-Katalysatoren hergestellt werden. Eine neue Serie von Exact®-Plastomeren verwendet Ethylen-Buten (EB) als Co-Monomer.

Polyolefin-Elastomere (POE) werden ebenfalls mittels Metallocen-Katalysatoren erhalten, vorzugsweise mittels der o.g. *"single-site"* bzw. *"constraint geometry"* Katalysatoren. Sie sind Copolymere aus Ethylen und einem anderen alpha-Olefin wie z.B. Buten oder Octen. Der Metallocen-Katalysator polymerisiert gezielt die Ethylen- und Co-Monomer-Sequenzen (s.o. die genannten Polyolefin-Elastomere von The Dow Chemical Company, die mittels der INSITE®-Technologie hergestellt werden). Eine Erhöhung der Anzahl der Co-Monomere ergibt Polymere mit höherer Elastizität, da der Einbau von Co-Monomeren die Polyethylen-Kristallinität unterbricht. Die meisten kommerziell erhältlichen POE sind Copolymere aus entweder Ethylen-Buten oder Ethylen-Octen.

Die ENGAGE Polyolefin-Elastomere (Ethylen-Octen-Copolymere: 8842, 8180, 8130, 8137, 5150, 8157, 8100, 8107, 8200, 8207, 8400, 8407, 8452, 8411, 8003, 8401, 8440, 8480, 8450, 8402, 8540; Ehylen-Buten-Copolymere: 7467, 7447, 7270, 7277, 7256) von The Dow Chemical Company weisen beispielsweise die folgenden Eigenschaften auf:
- Molekulare Gewichtsverteilung (modular weight distribution, MWD): eng bis moderat
- Schmelzindex bei 190 °C : < 0,5 bis 30 g/10 min
- Dichte: 0,857 bis 0,910 g/cm³
- Glasübergangstemperatur: -61 bis -35 °C
- Schmelzbereich: 36 bis 103 °C
- Shore A Härte: 56 bis 96
- Flexural Modulus: 3 bis 110 MPa

Das mindestens eine Polyolefin-Plastomer und/oder Polyolefin-Elastomer kann mit einem zwischen 0,1 und 100 liegenden Gew.-%-Anteil in der besagten mindestens einen Außenschicht der ersten Folie enthalten sein. Hier besteht ein großer Spielraum, je nach Anwendungsbereich und erwünschten Eigenschaften.

Gemäß einer bevorzugen Ausführungsform beträgt der Gew.-%-Anteil am mindestens einen Polyolefin-Plastomer und/oder Polyolefin-Elastomer mehr als 30 Gew.-% in der besagten mindestens einen Außenschicht. Vorzugsweise liegt der Gew.-%-Anteil bei mehr als 40 Gew.-% und besonders bevorzugt bei mehr als 50 Gew.-%.

Besonders bevorzugt sind eine Bedruckung und/oder eine Beschichtung und/oder eine Lackierung und/oder eine Metallisierung in mindestens einer inneren Schicht und/oder auf mindestens einer Außenschicht des Folienverbundes vorgesehen. Ein derartiger bedruckter und/oder lackierter und/oder beschichteter Folienverbund wird als Verpackung eingesetzt. Der Folienverbund wird bevorzugt nach seiner Herstellung bedruckt und/oder lackiert. Hierzu kann ein Primer hilfreich sein. Bevorzugt erfolgt die Bedruckung und/oder Lackierung direkt auf der Oberfläche des Folienverbundes.

Die Bedruckung und/oder Lackierung kann hierbei - vor oder, was bevorzugt ist, nach der Thermokaschierung - vorzugsweise auf der der ersten Folieneinheit abgewandten Außenschicht des erfindungsgemäßen Folienverbundes vorgenommen werden. Ein entsprechender, besonders bevorzugter Folienverbund weist also folgende Anordnung auf: 2K-Lack, Bedruckung, zweite Folieneinheit (als Trägerfolie), erste Folieneinheit (Thermokaschierfolie).

Alternativ oder zusätzlich kann auch die der ersten Folie zugewandte Außenschicht der zweiten Folie vor der Thermokaschierung bedruckt und/oder lackiert werden, so dass sich in diesem Fall der Druck und/oder der Lack zwischen den beiden Folien befindet. Gleiches gilt auch für die Metallisierung oder etwa eine Barrierebeschichtung, zum Beispiel mit SiOₓ.

Dementsprechend ist gemäß einer vorteilhaften Ausführungsform eine Bedruckung zwischen der ersten und der zweiten Folie vorhanden (vorzugsweise auf der zweiten Folie), während ein Hitzeschutzlack auf der Außenseite der zweiten Folieneinheit vorgesehen sein kann.

Gemäß vorteilhafter Ausführungsformen ist in der besagten mindestens einen Außenschicht der ersten Folie und/oder in mindestens einer weiteren Schicht der ersten Folie mindestens ein weiteres Polymer enthalten, welches vorzugsweise aus der folgenden Gruppe stammt:
- Olefin-Homo- oder Copolymere, insbesondere Polyethylen (PE) oder Polypropylen (PP) oder Polybuten;
- Polyamide (PA);
- Amorphe Thermoplaste, wie z.B. Polyvinylaromaten wie Polystyrol (PS) und Polyvinylhalogenide wie Polyvinylchlorid (PVC);
- Polyester, vorzugsweise Polyethylenterephthalat (PET), G-PET oder Polyhydroxyalkanoate (PHA);
- Polyurethane
- (Meth)Acryl-Ester-Polymere und -Copolymere;
- Styrol-Acrylnitril (SAN);
- Polyvinylester wie Polyvinylacetat;
- Polyvinylacetale;
- Polyvinylalkohole;
- ethylenhaltige Polyvinylalkohole (EVOH);
- Ethylen-Vinylacetat-Copolymere (EVAc);
- Polyether;
- Polycarbonate;
- Polysaccharide, Cellulose, Stärke;
- thermoplastische Elastomere (TPE), z.B. thermoplastische Polyurethane (TPU);
- Acrylnitril-Butadien-Styrol (ABS);
- Co-, Ter-, Quater-Polymere oder Polymere, die aus mehr als vier verschiedenen Monomeren aufgebaut sind, der oben aufgelisteten Verbindungen, bzw. Co-, Ter-, Quater-Polymere oder Polymere, die aus mehr als vier verschiedenen Monomeren aufgebaut sind, aus den Monomeren, aus denen die oben aufgelisteten Verbindungen aufgebaut sind;
wobei die genannten Polymere oder Copolymere auch mit funktionellen Gruppen modifiziert sein können, beispielsweise zur Erzielung eines Haftvermittlereffektes mit z.B. Carbonsäure-, Epoxid-, Hydroxyl-, Säureanhydrid-Gruppen.

Die konkrete Anwendung und die gewünschten Eigenschaften bestimmen hierbei die Wahl der Verbindungen. Der Anteil des oder der weiteren Polymere in der besagten Außenschicht kann insgesamt bis zu 99,9 Gew.-% und in der mindestens einen weiteren, von der besagten Außenschicht verschiedenen Schicht bis zu 100 Gew.-% betragen.

Zur weiteren Verbesserung der Hafteigenschaften der beiden Folieneinheiten kann die besagte Außenschicht der ersten Folie zur Erhöhung der Oberflächenspannung vorbehandelt sein, vorzugsweise durch eine Corona-, Plasma- und/oder Flamm-Vorbehandlung.

Die erste Folie der ersten Folieneinheit kann eine Monofolie oder eine Mehrschichtfolie sein, wobei erfindungsgemäß eine Außenschicht der ersten Folie das besagte mindestens ein Polyolefin-Plastomer und/oder Polyolefin-Elastomer enthält. Auch können beide Außenschichten der ersten Folieneinheit oder - falls die erste Folieneinheit keine weitere Folie als die erste Folie aufweist - beide Außenschichten der ersten Folie mindestens ein Polyolefin-Plastomer und/oder Polyolefin-Elastomer enthalten. Die Anzahl der Schichten der ersten Folie kann je nach Einsatzgebiet gewählt werden. Genannt seien hier lediglich beispielhaft drei, vier, fünf, sieben oder auch bis zu 25 und mehr Schichten. Bei allen diesen Folien enthält mindestens eine der beiden Außenschichten das besagte mindestens ein Polyolefin-Plastomer oder Polyolefin-Elastomer. Beispielhafte Schichtfolgen sind:
1. Schicht: PE + POP und/oder POE / 2. Schicht: Haftvermittler (HV) / 3. Schicht: Polyamid (PA), bei einem 3-Schicht-Aufbau, oder
1. Schicht: PA + POP und/oder POE / 2. Schicht: Haftvermittler (HV) / 3. Schicht: PE, bei einem anderen 3-Schicht-Aufbau, oder
1. Schicht: PE + POP und/oder POE / 2. Schicht: HV / 3. Schicht: PA / 4. Schicht: HV / 5. Schicht: PE, bei einem 5-Schicht-Aufbau, oder
1. Schicht: PE / 2. Schicht: HV / 3. Schicht: EVOH / 4. Schicht: HV / 5. Schicht: PA + POP und/oder POE, bei einem anderen 5-Schicht-Aufbau, oder
1. Schicht: PE + POP und/oder POE / 2. Schicht: HV / 3. Schicht: PA / 4. Schicht: EVOH / 5. Schicht: PA / 6. Schicht: HV / 7. Schicht: PE bei einem 7-Schicht-Aufbau.

Die erste Folie der besagten ersten Folieneinheit weist mindestens eine eigenständige Barriereschicht gegen den Durchtritt von Gasen und/oder chemischen Substanzen auf. Eine bevorzugte Basis dieser Barriereschicht umfasst Ethylenvinylalkohol (EVOH) oder Polyamid (PA) oder Cyclo-Olefin-Copolymer (COC) oder eine Kombination von diesen. Die genannten Verbindungen können jeweils mit bis zu 100 Gew.-% in der Barriereschicht enthalten sein. Durch die Barriere kann die Anwendungsvielfalt erheblich gesteigert werden.

Die erste Folie der besagten ersten Folieneinheit weist gemäß einer vorteilhaften Weiterbildung der Erfindung mindestens eine eigenständige Schicht auf, welche ein thermoplastisches Olefin-Homo- oder Copolymer enthält, vorteilhafterweise zu mehr als 50 Gew.-%, bevorzugt zu mehr als 75 Gew.-%, und besonders bevorzugt zu mehr als 95 Gew.-%.

Gemäß dem Vorgesagten kann eine 7-Schicht-Folie der ersten Folieneinheit beispielsweise wie folgt aufgebaut sein:

| Schichtnummer | Zusammensetzung | Anteil in Schicht in % | Dicke in µm |
|---|---|---|---|
| 1 | • POP | • 80 | 16-20 |
| | • LDPE | • 20 | |
| 2 | HV | 100 | 3-6 |
| 3 | PA | 100 | 2 |
| 4 | EVOH | 100 | 4 |
| 5 | PA | 100 | 2 |
| 6 | HV | 100 | 3-6 |
| 7 | LDPE | 100 | 14-18 |
| | | | Gesamtdicke: 44-58 µm |

Eine beispielhafte 5-Schicht-Folie kann wie folgt aufgebaut sein:

| Schichtnummer | Zusammensetzung | Anteil in Schicht in % | Dicke in µm |
|---|---|---|---|
| 1 | • POP | • 80 | 25-35 |
| | • LDPE | • 20 | |
| 2 | HV | 100 | 4-8 |
| 3 | CoPA (Copolyamid) | 100 | 20-30 |
| 4 | HV | 100 | 4-8 |
| 5 | LDPE | 100 | 25-35 |
| | | | Gesamtdicke: 78-116 µm |

Bei einer Weiterbildung der Erfindung können eine oder mehrere Schichten in einer oder mehreren Folien der ersten Folieneinheit und/oder der zweiten Folieneinheit geschäumt sein.

Die besagte thermische Aktivierung und Verbundhaftung zu der zweiten Folie wird vorzugsweise bei einer Temperatur zwischen 40 °C und 200 °C, bevorzugt zwischen 60 °C und 160 °C, und besonders bevorzugt zwischen 70 °C und 140 °C, erzielt. Diese Temperaturen sind ohne Weiteres auf den bekannten Maschinen einstellbar, so dass ein einfacher Herstellungsprozess möglich ist.

Die erste Folieneinheit kann als Schlauchform oder als Flachfolie vorliegen. In der Mehrzahl der Fälle wird die Flachfolienform bevorzugt sein.

Vorzugsweise beträgt die Schichtdicke der gegen die zweite Folie haftenden Außenschicht der ersten Folie zwischen 1 µm und 1000 µm, bevorzugt zwischen 10 µm und 200 µm, besonders bevorzugt zwischen 15 µm und 100 µm, und am meisten bevorzugt zwischen 20 µm und 80 µm.

Die erste Folie der ersten Folieneinheit weist bevorzugt eine Dicke von 10 bis 2000 µm, besonders bevorzugt von 20 bis 1500 µm, ganz besonders bevorzugt von 40 bis 1000 µm auf. Eine bevorzugte Dicke liegt zwischen 50 bis 200 µm.

Gemäß vorteilhafter Ausführungsformen weist die erste Folieneinheit lediglich eine einzige Folie, nämlich die erste Folie, auf.

Die beschriebene erste Folieneinheit wird erfindungsgemäß mit mindestens einer weiteren Folieneinheit (im vorliegenden Rahmen als "zweite Folieneinheit" bezeichnet) vollflächig durch thermische Aktivierung und vorteilhafterweise unter Einsatz bekannter Kaschierzylinder und Kaschierwalzen verbunden. Hierbei wird die Außenschicht der zuvor beschriebenen ersten Folie - enthaltend das besagte mindestens eine Polyolefin-Plastomer (POP) und/oder Polyolefin-Elastomer (POE) - mit einer gegenüber liegenden Außenschicht einer Folie (im Folgenden "zweite Folie" genannt) der zweiten Folieneinheit verbunden. Die thermische Aktivierung kann beispielsweise mittels Infrarot-Strahler, Heißluft, Heizstäben, Heizdrähten, Heizflammen oder einer induktiven Heizquelle erfolgen, wobei die Wärme vorzugsweise auf eine oder beide der zueinander gewandten Außenseiten der miteinander zu verbindenden ersten und zweiten Folie gerichtet ist. Es kann aber auch eine indirekte Erwärmung vorgenommen werden, beispielsweise durch Erwärmung der zweiten Folieneinheit, die in vielen Ausführungsformen der Erfindung als Trägerfolie dient.

Es wird insgesamt ein kaschierter Folienverbund bzw. eine Verbundfolie bestehend aus der ersten und der zweiten Folieneinheit erhalten, der bzw. die durch die thermisch aktivierte Außenschicht in der ersten Folie realisiert ist.

Mittels der erfindungsgemäßen thermisch aktivierten Kaschierung mindestens zweier Kunststofffolien-Einheiten sind die unterschiedlichsten Folienverbünde herstellbar. Der Einfachheit halber wird im Folgenden für die erste Folieneinheit die Kurzbezeichnung "A" verwendet, für die zweite Folieneinheit die Kurzbezeichnung "B" und für eine weitere, dritte Folieneinheit die Kurzbezeichnung "C". Im Rahmen der Erfindung sind Folienverbünde der Art A/B/A oder A/B/C oder B/A/B oder B/A/C herstellbar, wobei die erfindungsgemäße Kaschierung zwischen der ersten Folieneinheit A und der zweiten Folieneinheit B und/oder zwischen der ersten Folieneinheit A und der dritten Folieneinheit C realisiert ist. Selbstverständlich können auch Folienverbünden mit weiteren Folieneinheiten hergestellt werden, so dass vier oder noch mehr Folieneinheiten miteinander verbunden werden. Dabei sind mindestens zwei Folieneinheiten (jeweils bestehend aus mindestens einer Folie) gemäß der Erfindung durch thermisch aktivierte Kaschierung verbunden. Hierbei kann auch beispielsweise die dritte Folieneinheit eine erste Folie entsprechend der ersten Folieneinheit oder eine zweite Folie entsprechend der zweiten Folieneinheit aufweisen, um die dritte Folieneinheit ebenfalls mittels besagter thermischer Aktivierung mit der ersten Folieneinheit bzw. der zweiten Folieneinheit zu verbinden.

Gemäß bevorzugter Ausführungsformen weist die zweite Folieneinheit lediglich eine einzige (zweite) Folie auf, die aber aus mehreren (coextrudierten) Schichten bestehen kann. Diese einzige Folie - als Trägerfolie für die erste Folieneinheit - besitzt vorteilhafterweise eine Dicke von 10 µm bis 5000 µm, vorzugsweise von 20 µm bis 1000 µm und besonders bevorzugt von 100 µm bis 900 µm. Allgemein kann eine Folie der zweiten Folieneinheit eine Dicke von 10 µm bis 5000 µm, vorzugsweise von 20 µm bis 1000 µm, besonders bevorzugt von 100 µm bis 900 µm, aufweisen.

Beispielhafte vorteilhafte Ausführungsformen des erfindungsgemäßen Folienverbundes weisen eine Gesamtdicke von etwa 150 µm bis 1000 µm auf, wobei ein solcher Folienverbund vorzugsweise als einzige Folieneinheiten die erste und die zweite Folieneinheit aufweist. Vorteilhafte Wertepaare der Dicke der ersten Folieneinheit zur Dicke der zweiten Folieneinheit sind beispielsweise: 40 µm zu 150 µm, 50 µm zu 200 µm, und 100 µm zu 500 µm oder 600 µm.

Die der besagten Außenschicht der ersten Folie zugewandte Außenschicht der zweiten Folie der zweiten Folieneinheit enthält (bis zu 100 Gew.-%) vorzugsweise ein Polyester, besonders bevorzugt APET (amorphes PET, d.h. amorphes Polyethylenterephthalat), GPET oder PET-G (Glykol-modifiziertes Polyethylenterephthalat), CPET (kristallines PET), PHA (Polyhydroxyalkanoat), Polybutylenterephthalat (PBT) und/oder OPET (orientiertes PET). Es sind aber auch andere Materialien denkbar, wie zum Beispiel PE, PP, PA, PVC oder Polystyrol.

Gemäß einer diesbezüglich bevorzugten Ausführungsform besteht die zweite Folieneinheit aus einer einzigen Folie, die lediglich eine einzige Schicht oder bis zu drei Schichten aus APET aufweist. Diese APET-Folie ist mit der thermisch aktivierten Schicht der ersten Folie der ersten Folieneinheit kaschierend verbunden. Bei einer diesbezüglichen Weiterbildung ist diese einzige (zweite) Folie als Trägerfolie mit einer Dicke zwischen 100 und 900 µm ausgebildet, auf die ebenfalls nur eine einzige (erste) Folie der ersten Folieneinheit gemäß der Erfindung aufkaschiert wird bzw. ist. Ein solcher Folienverbund kann dann überraschenderweise, sogar wenn ein Druckbild zwischen den beiden Folien vorhanden ist und auch wenn ein Hitzeschutzlack vorhanden ist, ohne Qualitätseinbußen tiefgezogen werden, z.B. um eine Unterschale oder eine Oberfolie für eine Verpackung zu erhalten. Der erfindungsgemäße Folienverbund weist demnach auch nach dem Tiefziehen eine hervorragende Verbundhaftung auf. Die erfindungsgemäße Kleberkaschierung ist also bei den beim Tiefziehen herrschenden Temperaturen wärmebeständig. Auch die Bedruckung und der Lack bleiben unbeschädigt.

Gemäß alternativer, ebenfalls vorteilhafter Ausführungsformen enthält oder besteht die zweite Folie (bis zu 100 Gew.-%) - beispielsweise auch in diesem Fall als einzige Schicht oder bis zu drei Schichten dieser zweiten Folie, welche zudem die einzige Folie der zweiten Folieneinheit sein kann - aus Polyamid PA, beispielsweise vorliegend als Homo-PA oder PA-Copolymer, OPA und/oder CPA, und/oder Polypropylen PP, beispielsweise vorliegend als Homo-PP, PP-Copolymer, Homo-PP, PP-Copolymer, OPP und/oder CPP, und/oder Polystyrol PS, beispielsweise vorliegend als OPS, und/oder Polyethylen PE und/oder Polyvinylchlorid PVC.

Im Übrigen kann die zweite Folie - wie zuvor für die erste Folie aufgeführt - mindestens eine geschäumte Schicht, mindestens eine Zwischen- und/oder Deckschicht, und/oder mindestens eine eigenständige Barriereschicht gegen den Durchtritt von Gasen und/oder chemischen Substanzen aufweisen. Alternativ oder zusätzlich können auch bei anderen Folien (soweit vorhanden) der ersten und/oder zweiten Folieneinheit eigenständige Barriereschichten vorgesehen sein.

Zur Erhöhung der Oberflächenspannung kann es vorteilhaft sein, dass die zur besagten Außenschicht der ersten Folie gerichtete Außenschicht der zweiten Folie vorbehandelt ist, vorzugsweise durch Corona-, Plasma- und/oder Flamm-Vorbehandlung.

Die nicht für die Kaschierung vorgesehene Außenschicht der ersten Folieneinheit, d.h. die der zweiten Folieneinheit abgewandte Außenschicht, ist bevorzugt siegelfähig oder peelbar gegen eine Folie aus Polyester wie APET, G-PET, oder aus PP, PS, PVC, Polyamid ausgerüstet. Wenn die erste Folieneinheit lediglich die erste Folie umfasst, ist die der zweiten Folieneinheit abgewandte Außenschicht dieser ersten Folie siegelfähig oder peelfähig ausgebildet.

Weiter kann eine Innenschicht der thermokaschierbaren ersten Folieneinheit einen Klebstoff oder eine Klebstoffschicht enthalten, der oder die beim Öffnen der Verpackung (bestehend aus einer Oberfolie und einer Unterfolie) freigesetzt wird. Dies führt dann dazu, dass der erfindungsgemäße Folienverbund wiederverschließbar (zu ihrem Gegenpart) ist.

Bevorzugt wird der erfindungsgemäße Folienverbund als Oberfolie bei Verpackungen eingesetzt. Der Einsatz als Unterfolie ist aber auch ohne weiteres möglich. Es können aber auch sowohl die Oberfolie als auch die Unterfolie einer Verpackung aus dem erfindungsgemäßen Folienverbund bestehen.

Als Druckverfahren kommen die üblichen, dem Fachmann bekannten Verfahren in Frage, insbesondere Offset-Druck, Tiefdruck, Flexodruck, Siebdruck, Digitaldruck, HD-Druck, Tampondruck, Tintenstahldruck etc.

Die Lacke können auf bekannten Polymeren, wie zum Beispiel Polyurethan PU), Polyvinylbutral (PVB), Acrylat, Nitrocellulose (NC) oder auch auf NC/PU etc. basieren. Prinzipiell gibt es keine Einschränkung hinsichtlich der verwendbaren Lacke. Nur beispielhaft seien hier Heißsiegellacke, Anti-Rutschlacke, Schutzlacke, Hitzeschutzlacke, Peel-Lacke, Antifog-Lacke, Antistatik-Lacke, wasserabweisende Lacke, spritechte Lacke, Trennlacke, Überdrucklacke, überschreibbare Lacke, Glanzlacke, Mattlacke, UV-Schutzlacke, Lichtschutzlacke, leitfähige Lacke und Barrierelacke genannt. Vor dem Lackieren kann auch ein Primer eingesetzt werden, damit der Lack besser auf dem erfindungsgemäßen Folienverbund hält. Besonders bevorzugt ist die Verwendung eines 2K-Lackes, der vernetzend sein kann.

Wird als Barrierelack z.B. SiOx (Siliziumoxid) verwendet, so liegt diese Lackschicht vorzugsweise zwischen zwei Folien und vorteilhafterweise hierbei zwischen der ersten und der zweiten Folie des erfindungsgemäßen Folienverbundes. Gleiches gilt auch für eine Metallisierung.

Im Übrigen wird klargestellt, dass unter dem Begriff "Lackierung" im Rahmen dieser Erfindung auch Lackbeschichtungen verstanden werden, die auf dem erfindungsgemäßen Folienverbund aufgetragen sind. Auch Beschichtungen mit anderen Substanzen sind ohne Einschränkung möglich.

Sowohl bei Verwendung von Druckfarben als auch Lacken ist es besonders bevorzugt, wenn diese keine Lösungsmittel oder andere migrierende Bestandteile enthalten, damit auf diese Weise keine derartigen Bestandteile in den erfindungsgemäßen Folienverbund eingetragen werden. Daher empfiehlt sich die Aushärtung der Druckfarben bzw. der Lacke durch UV-Strahlung oder Elektronenstrahl-Härtung oder eine andere geeignete Härtung "trockener Systeme". Im Zuge der Härtung ist auch eine damit einhergehende Vernetzung von Druckfarben und Lacken besonders bevorzugt. Wenn die Folie bzw. der Folienverbund auf eine Rolle aufgewickelt wird, kann (optional) durch das Einspulen einer Zwischenfolie ein "Abklatsch" von der bedruckten oder lackierten/beschichteten (Außen)Seite auf die Seite der Folie oder des Folienverbunds, der später zum Füllgut gerichtet ist ("Löschpapier-Effekt"), vermieden werden. Dies empfiehlt sich etwa für den Fall, dass der Lack noch nachhärtet oder nachvernetzt.

Wichtig ist hierbei, dass auf der zum Füllgut gerichteten Seite des Folienverbunds keine migrierenden Bestandteile anzutreffen sind. Dies zu leisten ist die vorliegende Erfindung imstande.

Auch ist der Folienverbund bevorzugt derart ausgestaltet, dass er tiefziehbar oder tiefgezogen ist. Somit können beispielsweise Unterschalen oder auch Oberfolien oder Unter- und Oberfolien für Verpackungen hergestellt werden.

Nach dem Vorgesagten findet der erfindungsgemäß hergestellte Folienverbund vorzugsweise Verwendung als tiefgezogene oder nicht-tiefgezogene Verpackungsfolie im Food- und Non-Food-Bereich.

Die Erfindung betrifft ebenfalls ein Verfahren zur Herstellung eines wie oben beschriebenen erfindungsgemäßen Folienverbundes, wobei die besagte erste Folieneinheit mit der besagten zweiten Folieneinheit thermokaschiert wird.

Die Thermokaschierung erfolgt vorzugsweise inline, wobei unmittelbar vor der Thermokaschierung die erste und/oder die zweite Folieneinheit vorzugsweise durch Blas- oder Cast-(Co-)Extrusion hergestellt werden. Beispielsweise kann direkt vor dem Thermokaschieren die zweite Folieneinheit, die beispielsweise lediglich aus einer einzigen (also der zweiten) Folie aus z.B. mono APET besteht, mittels Cast-Extrusion hergestellt werden, um diese dann unmittelbar danach zur Herstellung eines Verbunds mit der ersten Folieneinheit (einschließlich der Thermokaschierfolie als erster Folie) zu veredeln, d.h. zu kaschieren. Die erste Folieneinheit kann beispielsweise zuvor durch Blasextrusion hergestellt worden sein.

Für die besagte Thermokaschierung wird die Temperatur mindestens einer der zueinander gerichteten Außenschichten der ersten oder der zweiten Folien zwischen 40 °C und 200 °C, bevorzugt zwischen 60 °C und 160 °C, und besonders bevorzugt zwischen 70 °C und 140 °C, eingestellt. Somit kann das POP und/oder POE in der Außenschicht der ersten Folie schmelzen und durch anschließendes Druckausüben und ggf. Kühlen eine Kaschierung der beiden Folieneinheiten erhalten werden.

Hierbei wird der Druck auf die zu kaschierenden, erwärmten Folieneinheiten zweckmäßigerweise je nach eingesetzten Foliensubstraten eingestellt.

Wie oben beschrieben, kann vor der besagten Thermokaschierung die besagte Außenschicht der ersten Folie und/oder die zu dieser Außenschicht gerichteten Außenschicht der zweiten Folie zur Erhöhung der Oberflächenspannung vorteilhafterweise vorbehandelt werden, vorzugsweise durch Corona-, Plasma- und/oder Flamm-Vorbehandlung.

Zur Verbesserung der Folieneigenschaften können bei der Extrusion der ersten und/oder der zweiten Folieneinheit ein oder mehrere der folgenden Stoffe bzw. Additive im Zuge der Extrusion in einer oder in mehreren Schichten eingesetzt werden. Als Additive können zum Beispiel Haftvermittler, funktionalisierte Polymere wie z.B. EVOH, optische Aufheller, thermische Stabilisatoren, Gleitmittel, Antioxidantien, Oxygen scavenger, Abstandshalter (z.B. Silica-Partikel, SAS), Slip-/Antiblockmittel, Farben, Pigmente, Schäumungsmittel, Antistatika, Prozesshilfsmittel, Lubricating Agents, Flammschutzmittel, Flammhemmer, Impact Modifier, Schlagzähverbesserer, Anti-Hydrolysemittel, UV-Absorber, UV-Schutzmittel, Stabilisatoren, Antifog-Additive, Wachse, Wachsadditive, Trennmittel, Siegel- oder Peel-Additive, Nukleierungsmittel, Compatibilizer (Verträglichkeitsmacher), Fließmittel, Fließverbesserer, Melt Strength Enhancer, Molekulargewichtserhöher, Vernetzer oder Weichmacher zugesetzt werden.

Die Folie kann ferner auf der oder den Oberfläche/n noch mit einem Pulver oder Puder versehen werden. Bevorzugt wird dazu beispielsweise Talkum eingesetzt.

Weitere Verarbeitungsmöglichkeiten bestehen in einem Zusammenbringen der erfindungsgemäßen Folie mit einem Gelege oder Gewirke, z.B. einem Kunststoffnetz oder einem Gitter. Alternativ kann dieses Gitter, Gelege bzw. Gewirke in die Folie zum Zwecke der weiteren Verstärkung mit eingebracht werden.

Die Erfindung wird anhand eines Ausführungsbeispiels, das in den Figuren 1-3 wiedergegeben ist, näher erläutert. Es zeigen:
- **Fig. 1**: einen Querschnitt durch einen Folienverbund mit einer ersten und zweiten Folieneinheit, einer Bedruckung und einer Lackschicht;
- **Fig. 2**: die zweite Folieneinheit der Fig. 1 im Querschnitt, vergrößert, und
- **Fig. 3**: die erste Folieneinheit der Fig. 1 im Querschnitt.

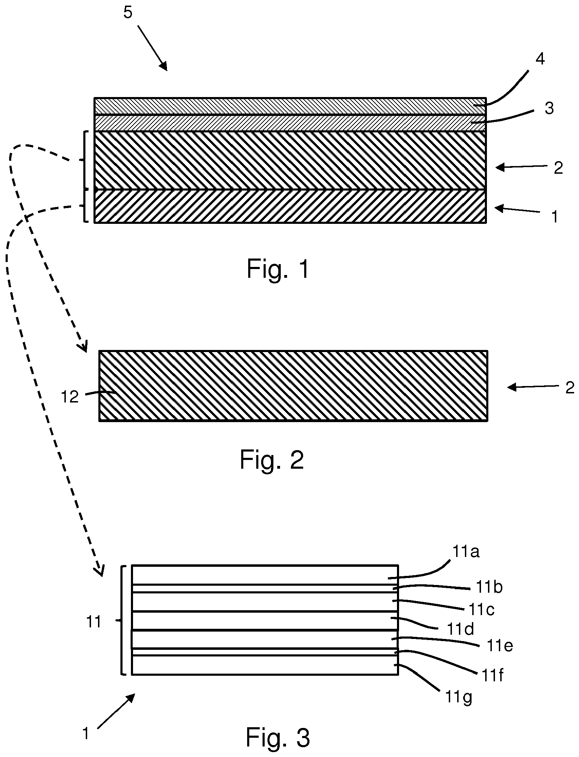

In der Fig. 1 ist schematisch ein Folienverbund 5 mit einer ersten Folieneinheit 1 dargestellt, die erfindungsgemäß und entsprechend dem Vorgesagten vollflächig auf eine zweite Folieneinheit 2 thermokaschiert wurde.

Entsprechend der Fig. 3 ist die erste Folieneinheit 1 gemäß diesem Ausführungsbeispiel als Folie 11 mit einem siebenschichtigen Aufbau ausgebildet. Die der zweiten Folieneinheit 2 zugewandte Außenschicht 11a enthält wie vorbeschrieben mindestens ein Polyolefin-Plastomer (POP) und/oder ein Polyolefin-Elastomer (POE) und ggf. weitere Polymere, beispielsweise ein LDPE. Die Schicht 11b ist vorliegend eine Haftvermittlerschicht, die Schicht 11c eine Polyamid-Schicht, die Schicht 11d eine EVOH-Schicht (Barriereschicht), die Schicht 11e wiederum eine Polyamid-Schicht, die Schicht 11f eine Haftvermittlerschicht und die Schicht 11g eine siegelfähige Schicht, beispielsweise Polyethylen enthaltend.

Die zweite Folieneinheit 2 weist vorliegend ebenfalls lediglich eine einzige Folie 12 auf, die zudem nur eine einzige Schicht umfasst (s. Fig. 2). Diese Folie 12 dient als Trägerfolie für die erste Folieneinheit 1, welche lediglich die erste Folie 11 umfasst. Die Folie 12 kann beispielsweise APET, GPET, CPET, PHA, PBT und/oder OPET, und/oder PA, beispielsweise vorliegend als Homo-PA oder PA-Copolymer, OPA und/oder CPA, und/oder PP, beispielsweise vorliegend als Homo-PP, PP-Copolymer, OPP und/oder CPP, und/oder PS, beispielsweise vorliegend als OPS, und/oder PE und/oder PVC, enthalten oder zu 100 Gew.-% aus diesen Verbindungen bestehen.

Auf der der ersten Folieneinheit 1 abgewandten Seite der zweiten Folieneinheit 2 ist eine Bedruckung 3 und darauf eine Lackschicht 4 vorhanden (s. Fig. 1). Der somit erhaltene Folienverbund 5 ist hervorragend geeignet, als stabile und migrationsfreie Verpackung, beispielsweise als Unterfolie und/oder als Oberfolie, verwendet zu werden. Es wird eine attraktive, unterhalb der Migrationsnachweisgrenze liegende und haltbare Verpackung realisiert. Ein Tiefziehen des erfindungsgemäßen Folienverbundes 5 ist ohne Weiteres möglich und erweitert die Bandbreite der Einsatzmöglichkeiten, insbesondere im Verpackungsbereich.

### Ausführungsbeispiele:

Die nachfolgenden Beispiele und Vergleichsbeispiele dienen zur Erläuterung der Erfindung und sind nicht einschränkend auszulegen. Im Folgenden werden verschiedene Vergleichsbeispiele (V1-V3) und erfindungsgemäße Beispielfolieneinheiten (B1-17) vorgestellt, die hinsichtlich ihrer Verbundhaftungseigenschaften sowie ihrer Migrationseigenschaften untersucht wurden.

### I. Verwendete Materialien

Das in vielen Beispielen verwendete LDPE ist Lupolen 2420 F von der Firma LyondellBasell Polymers. Auch das eingesetzte Lupolen 30100 ist ein LDPE von LyondellBasell Polymers.

Durethan C38 F von Lanxess ist ein Copolyamid mittlerer Viskosität.

Moplen EP240H ist ein nukleiertes heterophasiges Polypropylen-Copolymer von LyondellBasell.

Admer QB510E von Mitsui Chemicals ist ein auf Polypropylen basierender Haftvermittler, das mit Maleinsäureanhydridgruppen modifiziert ist.

Admer NF498E von Mitsui Chemicals ist ein mit Maleinsäureanhydridgruppen modifiziertes LDPE, besitzt eine große Adhäsion zu PET, EVOH und PA, ist sehr gut verarbeitbar und weist eine thermische Stabilität auf, die äquivalent oder höher im Vergleich zu gewöhnlichem PE ist.

EVAL T101 B von der Firma EVAL Europe ist ein Polymer auf EthylenVinylalkohol-Copolymer-Basis (EVOH).

Exact 0201 von der Firma Borealis Plastomers v.o.f. ist ein Polyolefin-Plastomer (POP), genauer ein Ethylen-basiertes Octen-Plastomer, das in einem Polymerisationsprozess in Lösung unter Verwendung eines Metallocen-Katalysators hergestellt wird. Seine Dichte liegt bei 0,902 g/cm³ entsprechend ISO 1183 (bei 23 °C).

Affinity PL 1850G ist ein Polyolefin-Plastomer (POP) der Firma The Dow Chemical Company, das mit Hilfe eines Metallocen-Katalysators hergestellt wird.

Engage 8450 von der Firma The Dow Chemical Company ist ein Polyolefin-Elastomer (POE), genauer ein Ethylen-Octen-Copolymer, das effizient bei der Coextrusion eingesetzt kann. Zudem ist es sehr kompatibel mit anderen Polyolefinen. Es wird ebenfalls mittels Metallocen-Katalyse hergestellt.

Polybutene-1 PB 8640M von der Firma LyondellBasell Polymers ist ein Random-Copolymer von Butene-1 mit einem niedrigen Ethylen-Anteil. Es wird hauptsächlich als Beimischung in der Siegelschicht von einfach zu öffnenden (sogenannten "peelbaren") Verpackungsfilmen eingesetzt.

Als Material für die zweite Folieneinheit kam handelsübliches APET zum Einsatz. Dieses kann auch regeneriert bzw. recycelt sein. Ebenso kann Eigenhäcksel aus Randbeschnitten etc. mit eingesetzt werden. Handelsübliches APET ist leicht erhältlich, beispielsweise unter dem Namen Wellman PermaClear® von der US-Firma DAK Americas, oder Novapet® von Novapet S.A., Spanien, oder Texpet R von der Firma Texplast GmbH, Wolfen oder SABIC® PET.

Für die Vergleichsbeispiele (V1 - V3) wurde das lösemittelfreie (LF) KleberSystem Henkel LIOFOL LA7785-21 / LA 6023-21-DE mit einem Auftragsgewicht 1,5 g/qm verwendet, um eine erste Folie (Kaschierfolie) mit einer zweiten Folie (Trägerfolie) zu verkleben. Die Vergleichsbeispiele (V1 - V3) repräsentieren einen Folienverbund mit herkömmlicher Kaschierung.

### II. Herstellung der Mehrschichtfolien

Die in den folgenden Tabellen bei den Beispielen aufgeführten ersten Folien wurden durch Blasfolienextrusion und anschließendem beidseitigen Aufschneiden des flachgelegten Folienschlauchs in Form von Flachfolien hergestellt. Unmittelbar vor der Thermokaschierung dieser ersten Folien wurden die zweiten Folieneinheiten hergestellt, die vorliegend ebenfalls aus lediglich einer, nämlich der zweiten, Folie bestanden. Die Herstellung der zweiten Folie (APET) erfolgte auf einer Cast-Anlage. In den Beispielen besteht die zweite Folieneinheit nur aus einer Folie mit nur einer Schicht. Es hätte aber auch beispielsweise eine 3-schichtige APET-Folie verwendet werden können.

Die in den Vergleichsbeispielen verwendeten OPP-Folien (Trägerfolien) sind handelsüblich zu erwerben. Die in den Vergleichsbeispielen verwendeten Kaschierfolien wurden mittels Blasfolienextrusion hergestellt.

Die Messungen bei den Beispielen wurden dann am fertigen thermokaschierten Folienverbund aus erster und zweiter Folie vorgenommen. In den nachstehenden Tabellen ist die zuerst genannte Schicht ("Schicht 1") diejenige Außenschicht der ersten Folie, welche durch thermische Aktivierung mit der zweiten Folie verbunden wird, wobei diese Außenschicht erfindungsgemäß mindestens ein Polyolefin-Plastomer (POP) und/oder ein Polyolefin-Elastomer (POE) enthält. Die Messungen bei den Vergleichsbeispielen erfolgten nach vollständiger Aushärtung des Kaschierklebers, wofür die Folien 10 Tage bei Raumtemperatur (22 °C) gelagert wurden.

Die in den Tabellen angegebenen prozentualen Anteile der einzelnen Chemikalien in den Schichten sind Gewichtsprozent-Angaben.

### III. Vermessung der Folien

Die Verbundhaftung der oben genannten Folienverbünde aus erster Folie (in den Tabellen aufgeführt) und zweiter Folie wurde nach DIN 53357 "Trennversuch der Schichten" vom Oktober 1982 gemessen, wobei das in der genannten DIN beschriebene "Verfahren A" angewendet wurde. Die Trennversuche dienen zur Beurteilung, wie fest die Schichten aneinander oder wie fest die Deckschichten auf dem Träger haften. Zur Beurteilung wird die Trennkraft ermittelt.

Als Prüfgerät dient die Universalprüfmaschine 281813 der Fa. Frank. Zudem wurde der Probenschneider CUT 02 derselben Firma eingesetzt.

Zur Prüfung der Lebensmittelunbedenklichkeit wurden die Folien Migrationsuntersuchungen mit den Simulanzlösungen 3%ige Essigsäure, 10%igem Ethanol, 95%igem Ethanol und Isooctan im einseitigen Kontakt unterzogen.

Die Globalmigration mit 3%iger Essigsäure, 10%igem Ethanol und 95%igem Ethanol wurde jeweils über 10 Tage bei 40°C durchgeführt. Die Globalmigration mit Isooctan wurde über 2 Tage bei 20°C durchgeführt.

Die Durchführung der Prüfung erfolgte in Anlehnung an die Methoden B 80.30-1 (EG) bis B 80.30-4 (EG) der amtlichen Sammlung von Untersuchungsverfahren nach § 64 LFGB.

Zur Prüfung wurden jeweils 0,5 dm² mit 25 ml Simulanzlösung in Kontakt gebracht.

### IV. Vermessene Folien

Die Schicht 1 ("Kaschierseite") der zu vermessenden Folienverbünde ist diejenige, die zur erfindungsgemäßen Thermokaschierung dient, die Schicht auf der gegenüberliegenden Seite ("Siegelseite") ist insbesondere als Siegelschicht im Falle des Einsatzes des Folienverbundes für Verpackungen vorgesehen, d.h. diese Schicht ist zum Füllgut gerichtet. Die Siegelschicht kann auch peelfähig ausgerüstet sein, damit die Verpackung mit weniger Kraftaufwand geöffnet werden kann.

### Vergleichsbeispiel 1:

Auf eine OPP-Trägerfolie (20 µm dick, handelsüblich erhältlich) wurde eine Kaschierfolie (60 µm dick) mit folgendem Aufbau kleberkaschiert:

| Schichtnummer | Zusammensetzung | Anteil in Schicht in % | Dicke in µm |
|---|---|---|---|
| 1 | • Lupolen 3010D | • 100 | 17,5 |
| Kasch ierseite | | | |
| 2 | • Admer NF498E | • 100 | 5 |
| 3 | • Durethan C38 F | • 100 | 5 |
| 4 | • EVAL T101B | • 100 | 5 |
| 5 | • Durethan C38 F | • 100 | 5 |
| 6 | • Admer NF498E | • 100 | 5 |
| 7 | • Lupolen 3010 D | • 90 | 17,5 |
| Siegelseite | • Polybuten-1 | • 10 | |
| | | | Summe: 60 µm |

### Vergleichsbeispiel 2:

Analog zum Vergleichsbeispiel V1, allerdings mit anderer Kaschierfolie (70 µm):

| Schichtnummer | Zusammensetzung | Anteil in Schicht in % | Dicke in µm |
|---|---|---|---|
| 1 | • Lupolen 3010D | • 100 | 22,5 |
| Kasch ierseite | | | |
| 2 | • Admer NF498E | • 100 | 5 |
| 3 | • Durethan C38 F | • 100 | 5 |
| 4 | • EVAL T101B | • 100 | 5 |
| 5 | • Durethan C38 F | • 100 | 5 |
| 6 | • Admer NF498E | • 100 | 5 |
| 7 | • Lupolen 3010 D | • 100 | 22,5 |
| Siegelseite | | | |
| | | | Summe: 70 µm |

### Vergleichsbeispiel 3:

Wie Vergleichsbeispiel V1 mit dem Unterschied, dass die OPP-Trägerfolie (20 µm dick) vollflächig bedruckt war und diese bedruckte Seite mit dem gleichen Kleber gegen die Kaschierfolie aus dem Vergleichsbeispiel V1 (60 µm dick) geklebt wurde.

### Beispiel 1:

Auf eine reine mono APET-Folie (450 µm dick) als Trägerfolie (zweite Folieneinheit, so auch im Folgenden) wurde eine 7-schichtige flache Thermokaschierfolie (50 µm dick) (erste Folieneinheit, so auch im Folgenden) mit folgendem Aufbau thermokaschiert. Die Außenschicht auf der Kaschierseite der Thermokaschierfolie enthielt normales Polyethylen mit POP.

| Schichtnummer | Zusammensetzung | Anteil in Schicht in % | Dicke in µm |
|---|---|---|---|
| 1 | • Lupolen 3010D | • 20 | 12,5 |
| Kasch ierseite | • Exact 0201 | • 80 | |
| 2 | • Admer NF498E | • 100 | 5 |
| 3 | • Durethan C38 F | • 100 | 5 |
| 4 | • EVAL T101B | • 100 | 5 |
| 5 | • Durethan C38 F | • 100 | 5 |
| 6 | • Admer NF498E | • 100 | 5 |
| 7 | • Lupolen 3010 D | • 90 | 12,5 |
| Siegelseite | • Polybuten-1 | • 10 | |
| | | | Summe: 50 µm |

### Beispiel 2:

Auf eine reine mono APET-Folie (450 µm dick) als Trägerfolie wurde eine 5-schichtige flache Thermokaschierfolie (50 µm dick) mit folgendem Aufbau thermokaschiert. Die Außenschicht auf der Kaschierseite der Thermokaschierfolie enthielt normales Polyethylen mit POP.

| Schichtnummer | Zusammensetzung | Anteil in Schicht in % | Dicke in µm |
|---|---|---|---|
| 1 | • Lupolen 2420 F | • 20 | 17,5 |
| Kasch ierseite | • Exact 0201 | • 80 | |
| 2 | • Admer NF498E | • 100 | 5 |
| 3 | • Durethan C38 F | • 100 | 5 |
| 4 | • Admer NF498E | • 100 | 5 |
| 5 | • Lupolen 2420 F | • 100 | 17,5 |
| Siegelseite | | | |
| | | | Summe: 50 µm |

### Beispiel 3:

Thermokaschierfolie wie in Beispiel 1, die gegen eine 20 µm handelsübliche OPP-Folie thermokaschiert wurde.

### Beispiel 4:

Thermokaschierfolie wie in Beispiel 1, die gegen eine 12 µm handelsübliche OPET-Folie thermokaschiert wurde.

### Beispiel 5:

Auf eine reine mono APET-Folie (450 µm dick) als Trägerfolie wurde eine 5-schichtige flache Thermokaschierfolie (100 µm dick) mit folgendem Aufbau thermokaschiert. Die Außenschicht auf der Kaschierseite der Thermokaschierfolie enthielt 100% POP.

| Schichtnummer | Zusammensetzung | Anteil in Schicht in % | Dicke in µm |
|---|---|---|---|
| 1 | • Exact 0201 | • 100 | 30 |
| Kasch ierseite | | | |
| 2 | • Admer NF498E | • 100 | 10 |
| 3 | • Durethan C38 F | • 100 | 20 |
| 4 | • Admer NF498E | • 100 | 10 |
| 5 | • Lupolen 2420 F | • 100 | 30 |
| Siegelseite | | | |
| | | | Summe: 100 µm |

### Beispiel 6:

Auf eine reine mono APET-Folie (450 µm dick) als Trägerfolie wurde eine 5-schichtige flache Thermokaschierfolie (100 µm dick) mit folgendem Aufbau thermokaschiert. Die Außenschicht auf der Kaschierseite der Thermokaschierfolie enthielt normales Polyethylen mit POP.

| Schichtnummer | Zusammensetzung | Anteil in Schicht in % | Dicke in µm |
|---|---|---|---|
| 1 | • Lupolen 2420 F | • 50 | 30 |
| Kasch ierseite | • Exact 0201 | • 50 | |
| 2 | • Admer NF498E | • 100 | 10 |
| 3 | • Durethan C38 F | • 100 | 20 |
| 4 | • Admer NF498E | • 100 | 10 |
| 5 | • Lupolen 2420 F | • 100 | 30 |
| Siegelseite | | | |
| | | | Summe: 100 µm |

### Beispiel 7:

Auf eine reine mono APET-Folie (450 µm dick) als Trägerfolie wurde eine 5-schichtige flache Thermokaschierfolie (100 µm dick) mit folgendem Aufbau thermokaschiert. Die Außenschicht auf der Kaschierseite der Thermokaschierfolie enthielt normales Polyethylen mit POP.

| Schichtnummer | Zusammensetzung | Anteil in Schicht in % | Dicke in µm |
|---|---|---|---|
| 1 | • Lupolen 2420 F | • 20 | 30 |
| Kasch ierseite | • Affinity 1850 G | • 80 | |
| 2 | • Admer NF498E | • 100 | 10 |
| 3 | • Durethan C38 F | • 100 | 20 |
| 4 | • Admer NF498E | • 100 | 10 |
| 5 | • Lupolen 2420 F | • 100 | 30 |
| Siegelseite | | | |
| | | | Summe: 100 µm |

### Beispiel 8:

Auf eine reine mono APET-Folie (450 µm dick) als Trägerfolie wurde eine 5-schichtige flache Thermokaschierfolie (100 µm dick) mit folgendem Aufbau thermokaschiert. Die Außenschicht auf der Kaschierseite der Thermokaschierfolie enthielt normales Polyethylen mit POP.

| Schichtnummer | Zusammensetzung | Anteil in Schicht in % | Dicke in µm |
|---|---|---|---|
| 1 | • Lupolen 3010D | • 30 | 30 |
| Kasch ierseite | • Exact 0201 | • 70 | |
| 2 | • Admer NF498E | • 100 | 10 |
| 3 | • Durethan C38 F | • 100 | 20 |
| 4 | • Admer NF498E | • 100 | 10 |
| 5 | • Lupolen 3010 D | • 100 | 30 |
| Siegelseite | | | |
| | | | Summe: 100 µm |

### Beispiel 9:

Auf eine reine mono APET-Folie (450 µm dick) als Trägerfolie wurde eine 5-schichtige flache Thermokaschierfolie (100 µm dick) mit folgendem Aufbau thermokaschiert. Die Außenschicht auf der Kaschierseite der Thermokaschierfolie enthielt normales Polyethylen mit POP.

| Schichtnummer | Zusammensetzung | Anteil in Schicht in % | Dicke in µm |
|---|---|---|---|
| 1 | • Lupolen 3010D | • 70 | 30 |
| Kasch ierseite | • Exact 0201 | • 30 | |
| 2 | • Admer NF498E | • 100 | 10 |
| 3 | • Durethan C38 F | • 100 | 20 |
| 4 | • Admer NF498E | • 100 | 10 |
| 5 | • Lupolen 3010 D | • 100 | 30 |
| Siegelseite | | | |
| | | | Summe: 100 µm |

### Beispiel 10:

Auf eine reine mono APET-Folie (450 µm dick) als Trägerfolie wurde eine 5-schichtige flache Thermokaschierfolie (100 µm dick) mit folgendem Aufbau thermokaschiert. Die Außenschicht auf der Kaschierseite der Thermokaschierfolie enthielt heterophasiges Polypropylen-Copolymer mit POP.

| Schichtnummer | Zusammensetzung | Anteil in Schicht in % | Dicke in µm |
|---|---|---|---|
| 1 | • Moplen EP 240 H | • 30 | 30 |
| Kasch ierseite | • Exact 0201 | • 70 | |
| 2 | • Admer NF 498 E | • 100 | 10 |
| 3 | • Durethan C38 F | • 100 | 20 |
| 4 | • Admer QB 510 E | • 100 | 10 |
| 5 | • Moplen EP 240 H | • 100 | 30 |
| Siegelseite | | | |
| | | | Summe: 100 µm |

### Beispiel 11:

Auf eine reine mono APET-Folie (450 µm dick) als Trägerfolie wurde eine 5-schichtige flache Thermokaschierfolie (100 µm dick) mit folgendem Aufbau thermokaschiert. Die Außenschicht auf der Kaschierseite der Thermokaschierfolie enthielt normales PE mit Polyolefin-Elastomer.

| Schichtnummer | Zusammensetzung | Anteil in Schicht in % | Dicke in µm |
|---|---|---|---|
| 1 | • Lupolen 2420 F | • 20 | 30 |
| Kasch ierseite | • Engage 8450 | • 80 | |
| 2 | • Admer NF498E | • 100 | 10 |
| 3 | • Durethan C38 F | • 100 | 20 |
| 4 | • Admer NF498E | • 100 | 10 |
| 5 | • Lupolen 2420 F | • 100 | 30 |
| Siegelseite | | | |
| | | | Summe: 100 µm |

### Beispiel 12:

Wie Beispiel 1 mit dem Unterschied, dass die Trägerfolie (450 µm dick) APET-Folie auf der kaschierten Seite vollflächig bedruckt war (gleiches Druckbild wie bei Vergleichsbeispiel 3). Die Thermokaschierfolie war die gleiche wie im Beispiel B1.

### Beispiel 13:

Wie Beispiel 1 mit dem Unterschied, dass die Trägerfolie (450 µm dick) APET-Folie auf der kaschierten Seite bedruckt war und auf der nicht kaschierten Seite mit einem handelsüblichen Hitzeschutzlack mit Auftragsgewicht 1 g/qm beschichtet war. Die Thermokaschierfolie war die gleiche wie im Beispiel B1.

### Thermogeformte erfindungsgemäße Folienverbünde (B14 bis B16):

### Beispiel 14:

Der Folienverbund aus Beispiel 13 wurde auf einer Multivac R530-Thermo-formanlage (oder FFS-Anlage, Form, Fill & Seal) tiefgezogen. Dadurch wurde der Folienverbund aus dem Beispiel 13 mit einer Dicke von 500 µm (450 µm/50 µm) zu einer Verpackungsschale bzw. eine sog. Muldenfolie zur Verwendung als Unterfolie bzw. Muldenfolie mit den Abmessungen Länge 18 cm, Breite 12 cm und Höhe 2 cm geformt. Die untenliegenden Ecken sind abgerundet, wie es bei einer typischen Unterfolie etwa für Käseverpackung handelsüblich der Fall ist.

### Beispiel 15:

Der Folienverbund aus Beispiel 13 wurde auf einer Multivac R530-Thermo-formanlage (oder FFS-Anlage, Form, Fill & Seal) tiefgezogen. Dadurch wurde der Folienverbund aus dem Beispiel 13 mit einer Dicke von 500 µm (450 µm/50 µm) zu einer Verpackungsschale bzw. eine Muldenfolie zur Verwendung als Unterfolie oder Muldenfolie mit den Abmessungen Länge 18 cm, Breite 12 cm und Höhe 10 cm geformt. Die untenliegenden Ecken sind abgerundet, wie es bei einer typischen Unterfolie etwa für Käseverpackung handelsüblich der Fall ist.

### Beispiel 16:

Der Folienverbund aus Beispiel 13 wurde auf einer Multivac R530-Thermo-formanlage (oder FFS-Anlage, Form, Fill & Seal) tiefgezogen. Dadurch wurde der Folienverbund aus dem Beispiel 13 mit einer Dicke von 500 µm (450 µm/50 µm) zu einer Verpackungsschale bzw. eine Muldenfolie zur Verwendung als Oberfolie oder Deckelfolie mit den Abmessungen Länge 15 cm, Breite 12 cm und Höhe 0,6 cm geformt. Die untenliegenden Ecken sind abgerundet, wie es bei einer typischen Oberfolie etwa für Käseverpackung handelsüblich der Fall ist.

### Beispiel 17:

Wie Beispiel 1 mit dem Unterschied, dass die Trägerfolie (450 µm dick) APET-Folie auf der nicht-kaschierten Seite bedruckt war und auf der nicht kaschierten, vorher bedruckten Seite mit einem Hitzeschutzlack (2K-Lack) mit Auftragsgewicht 1 g/qm beschichtet war. Die Thermokaschierfolie war die gleiche wie im Beispiel B1. Die Bedruckung und Lackierung wurde am Folienverbund vorgenommen, also nach der Thermokaschierung.

### V. Ergebnisse und Interpretation

Die folgende Tabelle gibt eine Übersicht über die Beispiele / Vergleichsbeispiele sowie die gemessene Verbundhaftung sowie die gemessene Migration, wobei die nachfolgenden Abkürzungen verwendet wurden:
LF: Lösemittelfrei
üB: über Bestimmungsgrenze,
uB: unter Bestimmungsgrenze
uG: unterhalb Grenzwert
(üG: über Grenzwert, nicht aufgetreten)

Die in der Tabelle genannte Migration stellt die Messung der Globalmigration dar. Simulanz war 3%ige Essigsäure. Haftvermittlerschichten zwischen PE- und PA-Schichten sind der Einfachheit halber als Schrägstriche (/) wiedergegeben.

| Na me | Trägerfolie (zweite Folieneinheit) | Kaschierte Folie (erste Folieneinheit) | Art der Kaschierung | Thermisch kaschierbare Schicht in Kaschierfolie | Verbundhaftung in N/15mm | Migration |
|---|---|---|---|---|---|---|
| V1 | 20 µm OPP unbedruckt | 60 µm, 7-Schicht, PE/PA/EVOH/PA/ PE | LF-Kleber | - | 4,3 | üB |
| | | | | | | uG |
| V2 | 20 µm OPP unbedruckt | 70 µm, 7-Schicht, PE/PA/EVOH/PA/ PE | LF-Kleber | - | 4,1 | üB |
| | | | | | | uG |
| V3 | 20 µm OPP bedruckt | wie V1 | LF-Kleber | - | 2,2 | üB |
| | | | | | | uG |
| B1 | 450 µm APET | 50 µm, 7-Schicht, PE/PA/EVOH/PA/ PE | thermisch | 80 POP | 9,4 | uB |
| | | | | 20 PE | | uG |
| B2 | 450 µm | 50 µm, 5-Schicht, PE/PA/PE | thermisch | 80 POP | 9,7 | uB |
| | APET | | | 20 PE | | uG |
| B3 | 20 µm | wie B1 | thermisch | 80 POP | 8,7 | uB |
| | OPP | | | 20 PE | | uG |
| B4 | 12 µm | wie B1 | thermisch | 80 POP | 9,9 | uB |
| | OPET | | | 20 PE | | uG |
| B5 | 450 µm | 100 µm, 5-Schicht, | thermisch | 100 POP | 9,6 | uB |
| | APET | PE/PA/PE | | | | uG |
| B6 | 450 µm | 100 µm, 5-Schicht, PE/PA/PE | thermisch | 50 POP | 7,2 | uB |
| | APET | | | 50 PE | | uG |
| B7 | 450 µm | 100 µm, 5-Schicht, PE/PA/PE | thermisch | 80 POP | 9,4 | uB |
| | APET | | | 20 PE | | uG |
| B8 | 450 µm | 100 µm, 5-Schicht, PE/PA/PE | thermisch | 70 POP | 8,3 | uB |
| | APET | | | 30 PE | | uG |
| B9 | 450 µm | 100 µm, 5-Schicht, PE/PA/PE | thermisch | 30 POP | 4,9 | uB |
| | APET | | | 70 PE | | uG |
| B10 | 450 µm | 100 µm, 5-Schicht, PP/PA/PP | thermisch | 70 POP | 8,5 | uB |
| | APET | | | 30 PP | | uG |
| B11 | 450 µm APET | 100 µm, 5-Schicht, PE/PA/PE | thermisch | 80 POE | 7,7 | uB |
| | | | | 20 PE | | uG |
| B12 | 450 µm APET bedruckt | 50 µm, 7-Schicht, PE/PA/EVOH/PA/ PE | thermisch | 80 POP | 8,3 | uB |
| | | | | 20 PE | | uG |
| B13 | 450 µm APET bedruckt und lackiert | 50 µm, 7-Schicht, PE/PA/EVOH/PA/ PE | thermisch | 80 POP | 8,1 | uB |
| | | | | 20 PE | | uG |
| B14 | 450 µm APET bedruckt und lackiert | Wie B13 | thermisch | 80 POP | Nach Thermoformen: 9,1 | uB |
| | | | | 20 PE | | uG |
| B15 | 450 µm APET bedruckt und lackiert | Wie B13 | thermisch | 80 POP | Nach Thermoformen: 8,9 | uB |
| | | | | 20 PE | | uG |
| B16 | 450 µm APET bedruckt und lackiert | Wie B13 | thermisch | 80 POP | Nach Thermoformen: 9,5 | uB |
| | | | | 20 PE | | uG |
| B17 | 450 µm APET bedruckt und lackiert | Wie B13 | thermisch | 80 POP | 8,3 | uB |
| | | | | 20 PE | | uG |

Die Ergebnisse sind wie folgt zu interpretieren. Die Vergleichsbeispiele V1 bis V3 zeigen, dass die derzeit im Stand der Technik bekannte Kaschierung zweier Folien mit einem Kleber, hier einem lösemittelfreien (LF) Kleber, die Anforderungen an einen Folienverbund erfüllt. So liegen die damit erzielten Verbundhaftungswerte bei unbedruckten Folien über 4 N/15 mm, wodurch der Verbund nur sehr schwer zu trennen ist, was oft nicht zerstörungsfrei geschehen kann. Die Verbundhaftungswerte nehmen aber etwa um die Hälfte ab, wenn eine der Folien auf der zu kaschierenden Seite ein Druckbild aufweist. Im Fall des Vergleichsbeispiels V3 wurde ein Wert für die Verbundhaftung von nur 2,2 N/15 mm ermittelt.

Da die üblicherweise verwendeten Kleber, etwa 2-K Polyurethan-Systeme, aus eher kürzerkettigen Isocyanaten und hydroxylgruppenhaltigen Komponenten bestehen, birgt dies die Gefahr der Migration nicht reagierter Bestandteile aus dem Kleber. So ist stets auf möglichst vollständige Kleberhärtung zu achten, um den Anteil migrationsfähiger Verbindungen weitestgehend zu minimieren. Ebenso muss das Mischungsverhältnis der Kleberkomponenten Basisrohstoff und Härter genau beachtet werden, da die Stöchiometrie der reaktiven Gruppen stimmen muss, um eine möglichst vollständige Härtung zu erreichen. Ein Kleber auf Isocyanat-Basis ist überdies empfindlich gegen Feuchtigkeit (Wasser) und kann dadurch Kohlendioxid abspalten, da die zwischenzeitlich durch Hydrolyse des Isocyanats gebildete Carbaminsäure nicht stabil ist. Das kann weitere Probleme aufwerfen: Zum einen werden dadurch Bläschen gebildet, die sich in der Kleberschicht einlagern und so das Aussehen des Folienverbundes beeinträchtigen, zum anderen bilden sich dadurch aber auch freie Amine, die migrationsfähig sind.

Insgesamt erfüllen herkömmliche Kleber (lösungsmittelhaltige (LH) oder lösungsmittelfreie (LF)) die Lebensmittelunbedenklichkeit, wenn diese für Lebensmittelverpackungen eingesetzt werden, da die Grenzwerte bei der Globalmigration deutlich unterschritten werden. Die Werte für die Globalmigration liegen zwar unter dem Grenzwert, doch häufig über der Nachweis- bzw. Bestimmungsgrenze. Daher werden diese migrierenden Stoffe bei Verwendung von herkömmlichen Klebern mit den üblichen Simulantien (3 % Essigsäure, 10% Ethanol, 95% Ethanol oder 100% Isooctan) im Zuge der Globalmigrationsmessung auch eindeutig detektiert.

Das zeigen auch die Ergebnisse zur Globalmigration aus den Vergleichsbeispielen. Die zulässigen Grenzwerte der Globalmigration sind zwar deutlich unterschritten, allerdings liegen die Werte über der Bestimmungsgrenze und es können somit migrierende Bestandteile in der Verpackung nachgewiesen werden.

Mit der Verwendung des erfindungsgemäßen Systems, welches auf einer Thermokaschierfolie beruht, die eine thermisch aktivierbare Klebschicht auf Polymerbasis aufweist, sind bei der Bestimmung der Globalmigration keine migrierenden Bestandteile aus dem Folienverbund mehr nachzuweisen ("not detectable"): Die Beispiele B1 bis B16 zeigen nicht nur Werte deutlich unter dem Grenzwert, sondern sogar stets Werte unter der jeweiligen Bestimmungsgrenze. Daran ändert sich sogar nichts, wenn eine der kaschierten Folien bedruckt ist (Beispiel B12), oder bedruckt und lackiert ist (Beispiele B13 bis B17. Auch bei den thermogeformten Folien (Beispiele B14 bis B16) sind bei der Bestimmung der Globalmigration keine migrierenden Bestandteile aus dem Folienverbund mehr nachzuweisen ("not detectable").

Wie die Beispiele B1 bis B5 weiter zeigen, werden bei der Verwendung des erfindungsgemäßen Systems überraschenderweise auch deutlich höhere Verbundhaftungswerte als bei der Verwendung der herkömmlichen Kleber gefunden. Die Werte für die Verbundhaftung liegen bei den Beispielen B1 bis B5 (Thermokaschierung von hier unbedruckten Folien), bei denen die thermisch aktivierbare Klebschicht auf einer Mischung von 20% Polyethylen mit 80% eines Polyolefin Plastomers (POP) basiert, mit 8,7 bis 9,9 N/15 mm über das doppelte höher als bei den Vergleichsbeispielen V1 und V2 (Kleberkaschierung von hier unbedruckten Folien).

Der Anteil des Polyolefin Plastomers (POP) beeinflusst, wie zu erwarten, die Verbundhaftung: Während bei einem Gehalt von 70% an POP in der Mischung mit 30% LDPE noch keine nennenswerte Abnahme der Verbundhaftung (VH) zu erkennen ist (VH: 8,3 N/15 mm, Beispiel B8), verringert sich die Verbundhaftung bei einem Gehalt von 50 % POP in der Mischung mit 50 % LDPE auf 7,2 N/15 mm (Beispiel B6). Bei einem Gehalt in der Mischung von 30% POP und 70% LDPE wird eine Verbundhaftung von immerhin noch 4,9 N/15 mm gefunden (Beispiel B9). Sogar im Fall des Beispiels B9 liegt die Verbundhaftung noch über den Verbundhaftungswerten, wie sie mit herkömmlichen LF- oder LH-Klebern erreicht werden können.

In Beispiel B5 wurde in der thermisch kaschierbaren Schicht der Kaschierfolie reines POP verwendet. Es fand sich mit einem Wert von 9,6 N/15 mm kein nennenswerter Unterschied zu den Verbundhaftungswerten derjenigen Kaschierfolien, die 80% POP in der thermisch kaschierbaren Schicht enthalten haben (Beispiele B1 bis B4).

Dass es bei dem Polyolefin Plastomer nicht auf die Typen ankommt, sondern dass Polyolefin Plastomere prinzipiell erfindungsgemäß einsetzbar sind, zeigt der Vergleich der Beispiele B1 bis B4 mit Beispiel B7. Sowohl mit der POP-Type Exact (Beispiele B1 bis B4) als auch mit der POP-Type Affinity (Beispiel B7) werden mit 9,4 N/15 mm gleiche Verbundhaftungswerte erzielt.

Bestätigt wird die generelle Eignung der Thermokaschierung zur Herstellung von Verbundfolien bzw. Folienverbünden mit den erfindungsgemäßen (Thermo-)Kaschierfolien durch die Beispiele B2, B3 und B4. Sowohl bei einer 450 µm APET-Folie als Trägerfolie (VH: 9,7 N/15 mm), als auch bei 20 µm OPP (B3) oder 12 µm OPET (B4) als Trägerfolie fanden sich mit 8,7 N/15 mm oder 9,9 N/15 mm sehr hohe Verbundhaftungswerte. Wie weitere Messungen gezeigt haben, kommt es in Bezug auf die Verbundhaftung ferner auch nicht auf die Dicke der Trägerfolie an.

Bei Beispiel B10 wurde eine thermisch aktivierbare Schicht in Form einer Mischung von 70% POP mit 30% PP eingesetzt. Der Vergleich mit Beispiel B8 (gleiches Mischungsverhältnis, nur mit PE) zeigt im Rahmen der Messgenauigkeit nahezu identische Verbundhaftungswerte. Also können sehr hohe Verbundhaftungswerte mit der thermisch aktivierbaren Schicht der Kaschierfolie auch durch eine Mischung mit anderen Polymeren erhalten werden.

Neben Polyolefin-Plastomeren (POP) können in der dafür vorgesehenen Außenschicht der Thermokaschierfolie auch Polyolefin-Elastomere (POE) erfolgreich verwendet werden, was Beispiel B11 belegt (Verwendung des POE Engage). Die Verbundhaftungswerte sind mit 7,7 N/15mm immer noch sehr hoch, auch wenn sie gegenüber der Verwendung von POP (Exact) in Beispiel B7 leicht abgenommen haben.

Wie oben erläutert, nimmt die Verbundhaftung bei Verwendung herkömmlicher Kleber ab, wenn eine der zu kaschierenden Folien (auf ihrer Kaschierseite) bedruckt ist. Dies ist bei dem erfindungsgemäßen System hingegen - überraschenderweise - nicht der Fall. Bei Beispiel B12 war die Trägerfolie eine bedruckte 450 µm dicke APET-Folie, auf deren bedruckte Seite kaschiert wurde. Bei Beispiel B13 war die Trägerfolie zusätzlich auf der nicht zu kaschierenden Seite lackiert. In beiden Fällen fanden sich mit 8,3 N/15 mm (B12) sowie 8,1 N/15 mm (B13) weiterhin sehr hohe Verbundhaftungswerte. Bei Beispiel B17 war die Trägerfolie zusätzlich auf der nicht zu kaschierenden bzw. auf der nicht kaschierten Seite bedruckt und lackiert. Der Verbundhaftungswert belief sich auf 8,3 N/15 mm.

Schließlich zeigen die Beispiele B14 bis B16, dass die sehr gute Verbundhaftung auch nach dem Thermoformen der erfindungsgemäßen Folieneinheit erhalten bleibt.

Die Erfindung wurde anhand von Beispielen näher erläutert. Diese sind jedoch nicht als einschränkend für die Ansprüche zu verstehen. Der erfindungsgemäße Folienverbund kann beispielsweise weitere Folieneinheiten aufweisen, wobei es z.B. denkbar ist, dass eine weitere Folieneinheit auf der der zweiten Folieneinheit abgewandten Seite auf die erste Folieneinheit aufkaschiert ist, hierbei insbesondere wiederum mittels einer thermisch aktivierbaren Außenschicht enthaltend POP und/oder POE wie vorbeschrieben. Diese thermisch aktivierbare Außenschicht kann eine Außenschicht der ersten Folieneinheit oder eine Außenschicht der weiteren Folieneinheit sein.

Auch andere Verbindungsarten sind ebenfalls möglich. Wesentlich für die Erfindung ist, dass zumindest eine erfindungsgemäße Kaschierung zweier Folien mittels einer POP und/oder POE enthaltenden Schicht vorhanden ist.

## Patentansprüche

1. Verpackung, wobei eine Oberfolie und/oder eine Unterfolie der Verpackung als Folienverbund ausgebildet ist, der mindestens umfasst:
- eine erste Folieneinheit (1) umfassend mindestens eine ein- oder mehrschichtige erste Folie (11) aus Kunststoff, und
- eine zweite Folieneinheit (2) umfassend mindestens eine ein- oder mehrschichtige zweite Folie (12) aus Kunststoff, wobei diese zweite Folie (12) an der ersten Folie (11) anliegt,
wobei die erste Folie (11) auf einer der zweiten Folie (12) zugewandten Außenseite eine thermisch aktivierbare Außenschicht (11a) aufweist, welche mindestens ein Polyolefin-Plastomer (POP) und/oder ein Polyolefin-Elastomer (POE) enthält, und wobei die erste Folie (11) über die besagte Außenschicht (11a) mit der zweiten Folie (12) vollflächig durch Kaschierung mittels thermischer Aktivierung und Druckausübung verbunden ist, wobei die Verbundhaftung zwischen der ersten und der zweiten Folie größer als 4 N/15 mm, vorzugsweise größer als 6 N/15 mm, besonders bevorzugt größer als 8 N/15 mm, ist..

2. Verpackung nach Anspruch 1, **dadurch gekennzeichnet, dass** das mindestens eine Polyolefin-Plastomer und/oder Polyolefin-Elastomer mit einem zwischen 0,1 und 100 liegenden Gew.-%-Anteil in der besagten mindestens einen Außenschicht (11a) der ersten Folie (11) enthalten ist.

3. Verpackung nach Anspruch 1 oder 2, **dadurch gekennzeichnet, dass** das mindestens eine Polyolefin-Plastomer oder Polyolefin-Elastomer mit mehr als 30 Gew.-% in der besagten mindestens einen Außenschicht (11a) der ersten Folie (11) enthalten ist, vorzugweise mit mehr als 40 Gew.-%, und besonders bevorzugt mit mehr als 50 Gew.-%.

4. Verpackung nach einem oder mehreren der vorherigen Ansprüche, **dadurch gekennzeichnet, dass** der Folienverbund eine Bedruckung (3) und/oder eine Beschichtung und/oder eine Lackschicht (4) und/oder eine Metallisierung in mindestens einer inneren Schicht oder auf mindestens einer Außenschicht aufweist.

5. Verpackung nach einem oder mehreren der vorhergehenden Ansprüche, **dadurch gekennzeichnet, dass** auf der der ersten Folieneinheit (1) abgewandten Seite des Folienverbundes, vorzugsweise der der ersten Folieneinheit abgewandten Seite der zweiten Folieneinheit (2), eine Bedruckung (3) aufgebracht ist und dass auf der Bedruckung (3) eine Lackschicht (4), vorzugsweise eine 2K-Lackschicht, aufgebracht ist.

6. Verpackung nach einem oder mehreren der vorhergehenden Ansprüche, **dadurch gekennzeichnet, dass** in der ersten Folie (11) mindestens ein weiteres Polymer enthalten ist, welches vorzugsweise aus der folgenden Gruppe stammt, wobei der Anteil des oder der weiteren Polymere in der besagten Außenschicht (11a) insgesamt bis zu 99,9 Gew.-% beträgt und/oder in einer anderen als der besagten Außenschicht (11a) bis zu 100 % beträgt:
- Olefin-Homo- oder Copolymere, insbesondere Polyethylen (PE) oder Polypropylen (PP) oder Polybuten;
- Polyamide (PA);
- Amorphe Thermoplaste, wie z.B. Polyvinylaromaten wie Polystyrol (PS) und Polyvinylhalogenide wie Polyvinylchlorid (PVC);
- Polyester, vorzugsweise Polyethylenterephthalat (PET), G-PET oder Polyhydroxyalkanoate (PHA);
- Polyurethane;
- (Meth)Acryl-Ester-Polymere und -Copolymere; Styrol-Acrylnitril (SAN);
- Polyvinylester wie Polyvinylacetat;
- Polyvinylacetale;
- Polyvinylalkohole;
- ethylenhaltige Polyvinylalkohole (EVOH);
- Polyether;
- Ethylen-Vinylacetat-Copolymere (EVAc);
- Polycarbonate;
- Polysaccharide, Cellulose, Stärke;
- thermoplastische Elastomere (TPE), z.B. thermoplastische Polyurethane (TPU);
- Acrylnitril-Butadien-Styrol (ABS);
- Co-, Ter-, Quater-Polymere oder Polymere, die aus mehr als vier verschiedenen Monomeren aufgebaut sind, der oben aufgelisteten Verbindungen;
wobei die genannten Polymere oder Copolymere auch mit funktionellen Gruppen modifiziert sein können, beispielsweise zur Erzielung eines Haftvermittlereffektes mit z.B. Carbonsäure-, Epoxid-, Hydroxyl-, Säureanhydrid-Gruppen.

7. Verpackung nach einem oder mehreren der vorhergehenden Ansprüche, **dadurch gekennzeichnet, dass** die erste Folieneinheit (1), vorzugsweise die erste Folie (11) dieser Folieneinheit (1), mindestens eine weitere Schicht aus der folgenden Gruppe umfasst:
- eigenständige Barriereschicht (11d) gegen den Durchtritt von Gasen und/oder chemischen Substanzen aufweist, vorzugsweise auf der Basis von Ethylenvinylalkohol (EVOH) oder Polyamid (PA) oder Cyclo-Olefin-Copolymer (COC) oder Kombination von diesen, und weiter bevorzugt jeweils mit bis zu 100 Gew.-% aus diesen Verbindungen;
- eine Kleberschicht als Sollbruchstelle für Wiederverschluss;
- siegelfähige oder peelbare Außenschicht (11g) auf der der zweiten Folieneinheit (2) abgewandten Seite.

8. Verpackung nach einem oder mehreren der vorherigen Ansprüche, **dadurch gekennzeichnet, dass** eine oder mehrere Schichten in einer oder mehreren Folien der ersten Folieneinheit (1) und/oder der zweiten Folieneinheit (2) geschäumt sind.

9. Verpackung nach einem oder mehreren der vorhergehenden Ansprüche, **dadurch gekennzeichnet, dass** die Schichtdicke der gegen die zweite Folie (12) haftenden Außenschicht (11a) der ersten Folie (11) zwischen 1 µm und 1000 µm, bevorzugt zwischen 10 µm und 200 µm, besonders bevorzugt zwischen 15 µm und 100 µm, und am meisten bevorzugt zwischen 20 µm und 80 µm, beträgt.

10. Verpackung nach einem oder mehreren der vorherigen Ansprüche, **dadurch gekennzeichnet, dass** die erste Folie (11) der ersten Folieneinheit (1) eine Dicke von 10 bis 2000 µm, besonders bevorzugt von 20 bis 1500 µm, ganz besonders bevorzugt von 30 bis 1000 µm, insbesondere von 40 bis 200 µm, aufweist, und/oder dass die zweite Folieneinheit (2) eine Folie, vorzugsweise in Form der zweiten Folie (12) und diese bevorzugt als einzige Folie, mit einer Dicke von 10 µm bis 5000 µm, vorzugsweise von 20 µm bis 1000 µm, besonders bevorzugt von 100 µm bis 900 µm, aufweist.

11. Verpackung nach einem oder mehreren der vorherigen Ansprüche, **dadurch gekennzeichnet, dass** die zweite Folie (12) mindestens eine Schicht aufweist, die vorzugsweise ein Polyester, besonders bevorzugt APET, GPET, CPET, PHA (Polyhydroxyalkanoat), Polybutylenterephthalat (PBT) und/oder OPET, und/oder PA, beispielsweise vorliegend als Homo-PA oder PA-Copolymer, OPA und/oder CPA, und/oder PP, beispielsweise vorliegend als Homo-PP, PP-Copolymer, OPP und/oder CPP, und/oder PS, beispielsweise vorliegend als OPS, und/oder PE und/oder PVC, enthält.

12. Verpackung nach einem oder mehreren der vorherigen Ansprüche, **dadurch gekennzeichnet, dass** der Folienverbund mindestens eine weitere aufkaschierte, dritte Folieneinheit aufweist, wobei vorzugsweise die dritte Folieneinheit eine erste Folie entsprechend der ersten Folieneinheit (1) oder eine zweite Folie entsprechend der zweiten Folieneinheit (2) aufweist, wobei die dritte Folieneinheit ebenfalls vollflächig mittels besagter thermischer Aktivierung bzw. mittels Thermokaschierung mit der ersten Folieneinheit (1) oder der zweiten Folieneinheit (2) verbunden ist.

13. Verpackung nach einem oder mehreren der vorherigen Ansprüche, **dadurch gekennzeichnet, dass** die Ober- und/oder Unterfolie tiefgezogen ist.

14. Verfahren zur Herstellung einer Ober- und/oder Unterfolie für eine Verpackung nach einem der vorhergehenden Ansprüche, wobei die besagte erste Folieneinheit (1) mit der besagten zweiten Folieneinheit (2) vollflächig thermokaschiert wird, wobei die Thermokaschierung vorzugsweise inline erfolgt, wobei vor der Thermokaschierung die erste und/oder die zweite Folieneinheit (1, 2) durch Blas- oder Cast-(Co-)Extrusion hergestellt werden, wobei der Folienverbund auf seiner der ersten Folieneinheit (1) abgewandten Außenseite, vorzugsweise auf der der ersten Folieneinheit (1) abgewandten Außenseite der zweiten Folieneinheit (2), erst bedruckt und dann lackiert wird, vorzugsweise mit einem 2K-Lack, bevorzugt nach erfolgter Thermokaschierung.

15. Verfahren nach dem vorherigen Verfahrensanspruch, **dadurch gekennzeichnet, dass** für die besagte Thermokaschierung die Temperatur mindestens der ersten oder der zweiten Folien zwischen 40 °C und 200 °C, bevorzugt zwischen 60 °C und 160 °C, und besonders bevorzugt zwischen 70 °C und 140 °C, eingestellt wird.

16. Verfahren nach einem oder mehreren der vorherigen Verfahrensansprüche, **dadurch gekennzeichnet, dass** vor der besagten Thermokaschierung die besagte Außenschicht (11a) der ersten Folie (11) und/oder die zu dieser Außenschicht (11a) gerichtete Außenschicht der zweiten Folie (2) zur Erhöhung der Oberflächenspannung vorbehandelt wird, vorzugsweise durch Corona-, Plasma- und/oder Flamm-Vorbehandlung.

## Claims

1. Packaging, wherein a top film and/or a base film of the packaging is a film composite, which comprises at least:
- a first film unit (1) comprising at least one single- or multi-layered first film (11) made of plastic, and
- a second film unit (2) comprising at least one single- or multi-layered second film (12) made of plastic, wherein this second film (12) rests against the first film (11),
wherein the first film (11) on an outer side facing the second film (12) has a thermally activatable outer layer (11a) containing at least one polyolefin plastomer (POP) and/or a polyolefin elastomer (POE), and wherein the first film (11) is connected via said outer layer (11a) to the second film (12) over the entire surface by lamination by means of thermal activation and pressure application, wherein
the composite adhesion between the first and the second film (11, 12) is greater than 4 N/15 mm, preferably greater than 6 N/15 mm, particularly preferably greater than 8 N/15 mm.

2. Packaging according to claim 1, **characterized in that** the at least one polyolefin plastomer and/or polyolefin elastomer is present with a wt.-% between 0.1 and 100 in said at least one outer layer (11a) of the first film (11).

3. Packaging according to claim 1 or 2, **characterized in that** the at least one polyolefin plastomer or polyolefin elastomer is present with more than 30 wt.-% in said at least one outer layer (11a) of the first film (11), preferably with more than 40 wt.-%, and particularly preferably with more than 50 wt.-%.

4. Packaging according to one or more of the preceding claims, **characterized in that** the film composite has a printing (3) and/or a coating and/or a varnish layer (4) and/or a metallization in at least one inner layer or on at least one outer layer.

5. Packaging according to one or more of the preceding claims, **characterized in that** on the side of the film composite facing away from the first film unit (1), preferably on the side of the second film unit (2) facing away from the first film unit, a printing (3) is applied and that on the printing (3) a varnish layer (4), preferably a two-component varnish layer, is applied.

6. Packaging according to one or more of the preceding claims, **characterized in that** in the first film (11) at least one further polymer is present, which preferably originates from the following group, wherein the proportion of the one or more further polymers in total in said outer layer (11a) is up to 99.9 wt.-% and/or in a different one than said outer layer (11a) is up to 100%:
- olefin homopolymers or copolymers, in particular polyethylene (PE) or polypropylene (PP) or polybutene;
- polyamides (PA);
- amorphous thermoplastics, such as e.g. polyvinyl aromatics such as polystyrene (PS) and polyvinyl halides such as polyvinyl chloride (PVC);
- polyesters, preferably polyethylene terephthalate (PET), G-PET or polyhydroxyalkanoates (PHA);
- polyurethanes;
- (meth-)acrylic ester polymers and copolymers; Styrene-acrylonitrile (SAN);
- polyvinyl esters such as polyvinyl acetate;
- polyvinyl acetals;
- polyvinyl alcohols;
- ethylene-containing polyvinyl alcohols (EVOH);
- polyethers;
- ethylene-vinyl acetate copolymers (EVAc);
- polycarbonates;
- polysaccharides, cellulose, starch;
- thermoplastic elastomers (TPE), e.g. thermoplastic polyurethanes (TPU);
- acrylonitrile-butadiene-styrene (ABS);
- co-, ter-, quater-polymers or polymers composed of more than four different monomers of the compounds listed above,
wherein said polymers or copolymers may also be modified with functional groups, for example, in order to obtain an adhesion promoter effect, e.g. with carboxylic acid groups, epoxy groups, hydroxyl groups, acid anhydride groups.

7. Packaging according to one or more of the preceding claims, **characterized in that** the first film unit (1), preferably the first film (11) of this film unit (1), comprises at least one further layer from the following group:
- independent barrier layer (11d) against the passage of gases and/or chemical substances, preferably on the basis of ethylene vinyl alcohol (EVOH) or polyamide (PA) or cyclo-olefin copolymer (COC) or a combination of these, and further preferably in each case with up to 100 wt.-% of these compounds;
- an adhesive layer as a predetermined breaking point for re-closure;
- sealable or peelable outer layer (11g) on the side facing away from the second film unit (2).

8. Packaging according to one or more of the preceding claims, **characterized in that** one or more layers in one or more films of the first film unit (1) and/or the second film unit (2) are foamed.

9. Packaging according to one or more of the preceding claims, **characterized in that** the layer thickness of the outer layer (11a) of the first film (11) adhering against the second film (12) is between 1 µm and 1000 µm, preferably between 10 µm and 200 µm, particularly preferably between 15 µm and 100 µm, and most preferably between 20 µm and 80 µm.

10. Packaging according to one or more of the preceding claims, **characterized in that** the first film (11) of the first film unit (1) has a thickness of 10 to 2000 µm, particularly preferably of 20 to 1500 µm, very particularly preferably of 30 to 1000 µm, especially from 40 to 200 µm, and/or that the second film unit (2) comprises a film, preferably in the form of the second film (12) and this preferably in the form of a single film, with a thickness of 10 µm to 5000 µm, preferably of 20 µm to 1000 µm, particularly preferably from 100 µm to 900 µm.

11. Packaging according to one or more of the preceding claims, **characterized in that** the second film (12) has at least one layer containing preferably a polyester, particularly preferably APET, GPET, CPET, PHA (polyhydroxy alkanoate), polybutylene terephthalate (PBT) and/or OPET, and/or PA, for example present as a homo-PA or PA-copolymer, OPA and/or CPA, and/or PP, for example present as a homo-PP, PP-copolymer, OPP and/or CPP, and/or PS, for example present as OPS, and/or PE and/or PVC.

12. Packaging according to one or more of the preceding claims, **characterized in that** the film composite has at least one further laminated third film unit, wherein preferably the third film unit comprises a first film corresponding to the first film unit (1) or a second film corresponding to the second film unit (2), wherein the third film unit is likewise connected to the first film unit (1) or the second film unit (2) over the entire surface by means of said thermal activation or by means of thermal lamination.

13. Packaging according to one or more of the preceding claims, **characterized in that** the top and/or the base film is deep-drawn.

14. Method for producing a top and/or base film for a packaging according to any one of the preceding claims, wherein said first film unit (1) is thermally laminated over the entire surface with the said second film unit (2), wherein the thermal lamination is preferably carried out inline, wherein prior to the thermal lamination, the first and/or the second film unit (1, 2) are produced by blown or cast (co-)extrusion, wherein the film composite on its outer side facing away from the first film unit (1), preferably on the outer side of the second film unit (2) facing away from the first film unit (1), is first printed and then varnished, preferably with a two-component varnish, preferably after the thermal lamination has been completed.

15. Method according to the preceding method claim, **characterized in that** for said thermal lamination the temperature of at least the first or the second film is set between 40°C and 200°C, preferably between 60°C and 160°C, and particularly preferably between 70°C and 140°C.

16. Method according to one or more of the preceding method claims, **characterized in that**, prior to said thermal lamination said outer layer (11a) of the first film (11) and/or the outer layer of the second film (2) facing said outer layer (11a) is pre-treated, in order to increase the surface tension, preferably by corona, plasma and/or flame pre-treatment.

## Revendications

1. Emballage, dans lequel une feuille supérieure et/ou une feuille inférieure de l'emballage se présente(nt) sous la forme d'une feuille composite, quelle comprend au moins :
- une première unité de feuille (1) comprenant au moins une première feuille (11) à une ou plusieurs couche(s) en matière plastique, et
- une seconde unité de feuille (2) comprenant au moins une seconde feuille (12) à une ou plusieurs couche(s) en matière plastique, sachant que cette seconde feuille (12) est en contact avec la première feuille (11), dans lequel la première feuille (11) comporte sur une face extérieure orientée vers la seconde feuille (12) une couche extérieure (11a) thermiquement activable, laquelle contient au moins un plastomère polyoléfine (POP) et/ou un élastomère polyoléfine (POE), et dans lequel la première feuille (11) est reliée sur toute la surface avec la seconde feuille (12) via ladite couche extérieure (11a) par contre-collage à l'aide d'activation thermique et application de pression, dans lequel la résistance du contre-collage entre la première et la seconde feuille (11, 12) est supérieure à 4 N/15 mm, de préférence supérieure à 6 N/15 mm, de manière particulièrement préférée, supérieure à 8 N/15 mm.

2. Emballage selon la revendication 1, **caractérisé en ce que** l'au moins un plastomère polyoléfine et/ou élastomère polyoléfine est contenu dans ladite au moins une couche extérieure (11a) de la première feuille (11) en une part comprise entre 0,1 % et 100 % du poids.

3. Emballage selon la revendication 1 ou 2, **caractérisé en ce que** l'au moins un plastomère polyoléfine et/ou élastomère polyoléfine est contenu dans ladite au moins une couche extérieure (1 1a) de la première feuille (11) en une part supérieure à 30 % du poids, de préférence, supérieure à 40 % du poids et, de manière particulièrement préférée, supérieure à 50 % du poids.

4. Emballage selon l'une ou plusieurs des revendications précédentes, **caractérisé en ce que** la feuille composite présente une impression (3) et/ou un revêtement et/ou une couche de vernis (4) et/ou une métallisation dans au moins une couche intérieure ou sur au moins une couche extérieure.

5. Emballage selon l'une ou plusieurs des revendications précédentes, **caractérisé en ce que** sur la face de la feuille composite opposée à la première unité de feuille (1), de préférence sur la face de la seconde unité de feuille (2) opposée à la première unité de feuille (1), il est appliqué une impression (3), et que sur l'impression (3), il est appliqué une couche de vernis (4), de préférence une couche de vernis à deux composants.

6. Emballage selon l'une ou plusieurs des revendications précédentes, **caractérisé en ce que** la première feuille (11) contient au moins un polymère supplémentaire, lequel est de préférence issu du groupe suivant, sachant que la part du ou des polymère(s) supplémentaire(s) dans ladite couche extérieure (11a) atteint au total 99,9 % du poids et/ou atteint 100 % dans une couche autre que ladite couche extérieure (11a) :
- homopolymère ou copolymère d'oléfine, en particulier polyéthylène (PE) ou polypropylène (PP) ou polybutène ;
- polyamides (PA) ;
- thermoplastiques amorphes, tels que, par exemple, polyvinylaromatiques tels que polystyrène (PS) et halogénures de polyvinyle tels que chlorure de polyvinyle (PVC) ;
- polyesters, de préférence polytéréphtalate d'éthylène (PET), G-PET ou polyhydroxyalcanoates (PHA) ;
- polyuréthanes,
- polymères et copolymères d'ester (méth)acrylique ; Styrène-acrylonitrile (SAN) ;
- polyesters de vinyle tels qu'acétate de polyvinyle ;
- acétals de polyvinyle ;
- alcools polyvinyliques ;
- alcools polyvinyliques contenant de l'éthylène (EVOH) ;
- polyéthers ;
- copolymères éthylène-acétate de vinyle (EVAc) ;
- polycarbonates ;
- polysaccharides, cellulose, amidon ;
- élastomères thermoplastiques (TPE), par exemple polyuréthanes thermoplastiques (TPU) ;
- Acrylonitrile butadiène styrène (ABS) ;
- copolymères, terpolymères, quaterpolymères ou polymères composés de plus de quatre monomères différents, des liaisons énumérées ci-dessus ;
sachant que les polymères et copolymères cités peuvent également être modifiés par des groupes fonctionnels, par exemple en vue d'obtenir un effet d'accrochage avec, par exemple, des groupes d'acide carboxylique, époxydes, hydroxyles, d'anhydrides d'acide.

7. Emballage selon l'une ou plusieurs des revendications précédentes, **caractérisé en ce que** la première unité de feuille (1), de préférence la première feuille (11) de cette unité de feuille (1), comporte au moins une couche supplémentaire issue du groupe suivant :
- couche barrière indépendante (11d) contre la traversée par les gaz et/ou les substances chimiques, de préférence sur la base d'éthylène alcool vinylique (EVOH) ou de polyamide (PA) ou de copolymère de cyclooléfine (COC) ou d'une combinaison de ces substances, et, de manière davantage préférée, avec respectivement jusqu'à 100 % du poids de ces liaisons ;
- couche d'adhésif en tant que point de rupture nominale pour la refermeture;
- couche extérieure (11g) scellable ou pelable sur la face opposée à la seconde unité de feuille (2).

8. Emballage selon l'une ou plusieurs des revendications précédentes, **caractérisé en ce qu'**une ou plusieurs couches dans une ou plusieurs feuilles de la première unité de feuille (1) et/ou de la seconde unité de feuille (2) sont expansées.

9. Emballage selon l'une ou plusieurs des revendications précédentes, **caractérisé en ce que** l'épaisseur de couche de la couche extérieure (11a) de la première feuille (11) adhérant à la seconde feuille (12) se situe entre 1 µm et 1000 µm, de préférence, entre 10 µm et 200 µm, de manière particulièrement préférée, entre 15 µm et 100 µm, et de manière la plus préférée, entre 20 µm et 80 µm.

10. Emballage selon l'une ou plusieurs des revendications précédentes, **caractérisé en ce que** la première feuille (11) de la première unité de feuille (1) présente une épaisseur de 10 à 2000 µm, de préférence de 20 à 1500 µm, de manière particulièrement préférée, de 30 à 1000 µm, en particulier, de 40 à 200 µm, et/ou que la seconde unité de feuille (2) comporte une feuille, de préférence sous la forme de la seconde feuille (12) et cette dernière de préférence en tant que feuille unique, avec une épaisseur de 10 µm à 5000 µm, de préférence, de 20 µm à 1000 µm, de manière particulièrement préférée, de 100 µm à 900 µm.

11. Emballage selon l'une ou plusieurs des revendications précédentes, **caractérisé en ce que** la seconde feuille (12) comporte au moins une couche qui contient de préférence un polyester, de manière particulièrement préférée APET, GPET, CPET, PHA (polyhydroxyalcanoate), polytéréphtalate de butylène (PBT) et/ou OPET, et/ou PA, par exemple disponible en tant que Homo-PA ou copolymère de PA, OPA et/ou CPA, et/ou PP, par exemple disponible en tant que Homo-PP, copolymère de PP, OPP et/ou CPP, et/ou PS, par exemple disponible en tant que OPS, et/ou PE et/ou PVC.

12. Emballage selon l'une ou plusieurs des revendications précédentes, **caractérisé en ce que** la feuille composite comporte au moins une troisième unité de feuille supplémentaire contrecollée, sachant que la troisième unité de feuille comporte de préférence une première feuille correspondant à la première unité de feuille (1) ou une seconde feuille correspondant à la seconde unité de feuille (2), sachant que la troisième unité de feuille est également reliée sur toute la surface avec la première unité de feuille (1) ou la seconde unité de feuille (2) à l'aide de ladite activation thermique ou de la lamination thermique.

13. Emballage selon l'une ou plusieurs des revendications précédentes, **caractérisé en ce que** la feuille supérieure et/ou la feuille inférieure est/sont emboutie(s).

14. Procéder pour fabriquer une feuille supérieure et/ou une feuille inférieure pour un emballage selon l'une des revendications précédentes, dans lequel ladite première unité de feuille (1) est thermiquement laminée sur toute la surface avec ladite seconde unité de feuille (2), dans lequel la lamination thermique s'effectue de préférence en ligne, dans lequel, avant la lamination thermique, la première et/ou la seconde unité de feuille (1, 2) est/sont fabriquée(s) par extrusion-soufflage ou extrusion à plat (co-extrusion), dans lequel la feuille composite, sur sa face extérieure opposée à la première unité de feuille (1), de préférence sur la face extérieure de la seconde unité de feuille (2) opposée à la première unité de feuille (1), est d'abord imprimée puis vernie, de préférence avec un vernis à deux composants, de préférence après la fin de la lamination thermique.

15. Procédé selon la revendication de procédé précédente, **caractérisé en ce que** pour ladite lamination thermique, la température au moins de la première ou de la seconde feuille est réglée entre 40 °C et 200 °C, de préférence entre 60 °C et 160 °C, et de manière particulièrement préférée, entre 70 °C et 140 °C.

16. Procédé selon l'une ou plusieurs des revendications de procédé précédentes, **caractérisé en ce que**, avant ladite lamination thermique, ladite couche extérieure (11a) de la première feuille (11) et/ou la couche extérieure de la seconde feuille (2) dirigée vers cette couche extérieure (11a) est soumise à un prétraitement afin d'augmenter la tension superficielle, de préférence par prétraitement à effet de couronne, au plasma et/ou à la flamme.
